# EUROPEAN PATENT APPLICATION

(11) **EP 4 410 757 A1**
(43) Date of publication of application: **07.08.2024**
(21) Application number: 22876503.8
(22) Date of filing: 29.09.2022
(51) Int. Cl.: C03C 27/12, B32B 17/10, B32B 27/20

(54) **INTERLAYER FILM FOR LAMINATED GLASS, AND LAMINATED GLASS**

(30) Priority: 30.09.2021 JP 2021162321
(71) Applicant: SEKISUI CHEMICAL CO., LTD., Osaka-shi Osaka 530-8565 (JP)
(72) Inventor: NAKAYAMA, Kazuhiko, Koka-shi, Shiga 528-8585 (JP); OKAJIMA, Moyuru, Koka-shi, Shiga 528-8585 (JP); SHIRAISHI, Kazuma, Koka-shi, Shiga 528-8585 (JP)
(74) Representative: Ter Meer Steinmeister & Partner
(86) International application number: PCT/JP2022/036579
(87) International publication number: WO 2023/054640

(57) **Abstract**

An interlayer film for laminated glass including one or more colorants, wherein the colorant includes a colorant (Y) including a particular structure, and the colorant (Y) has a D50 of 160 nm or less as measured by a transmission electron microscope.

## Description

### Technical Field

The present invention relates to an interlayer film for laminated glass, and laminated glass having an interlayer film for laminated glass.

### Background Art

Laminated glass is widely used for window glass for various conveyances such as automobiles and window glass for buildings and the like because even if laminated glass is subjected to an external impact and broken, pieces of the broken glass rarely scatter and are safe. As the laminated glass, laminated glass in which an interlayer film for laminated glass including a resin component such as a polyvinyl acetal resin is interposed between a pair of glasses and integrated is widely known.

It is known that for laminated glass, for the purpose of enhancing the designability, and the like, a colorant is added to an interlayer film to form colored laminated glass. In laminated glass, colorants exhibiting various colors are used, and as yellow colorants, an azo compound, an isoindoline compound, and the like are used.

For example, Patent Literature 1 discloses that an interlayer film in a laminated structure contains, in addition to fine particles having a heat ray blocking function, a selected wavelength absorbing material having a light transmittance of 90% or more at a wavelength of 550 nm and a light transmittance of 40% or less at a wavelength of 400 nm. Here, it is shown that as the selected wavelength absorbing material, a yellow colorant such as Pigment Yellow or Solvent Yellow may be used. By using the selected wavelength absorbing material, the laminated structure disclosed in Patent Literature 1 can be adjusted to a predetermined color tone to enhance the designability.

### Citation List

### Patent Literature

PTL1: JP 2012-218972 A

### Summary of Invention

### Technical Problem

However, yellow colorants generally do not have sufficient durability, and therefore it is possible that when standing under irradiation with sunlight or high temperature continues for a long period, laminated glass including a yellow colorant in the interlayer film deteriorates, the color tone changes, and the designability decreases. Another problem is that yellow pigments generally have a large particle diameter, and therefore light diffusion occurs, the haze increases, and the color is not vivid.

Accordingly, it is an object of the present invention to provide an interlayer film for laminated glass and laminated glass that have low haze and high weather resistance, and can maintain high designability even if used under sunlight irradiation or under high temperature for a long period.

### Solution to Problem

As a result of diligent studies, the present inventors have found that the object can be achieved by using a colorant having a particular structure and setting the D50 of the colorant at a certain value or less, and completed the present invention below. Specifically, the present invention provides the following [1] to [31].
[1] An interlayer film for laminated glass including one or more colorants, wherein
   the colorant includes a colorant (Y) having a structure represented by the following formula (1), and
   the colorant (Y) has a D50 of 160 nm or less as measured by a transmission electron microscope, 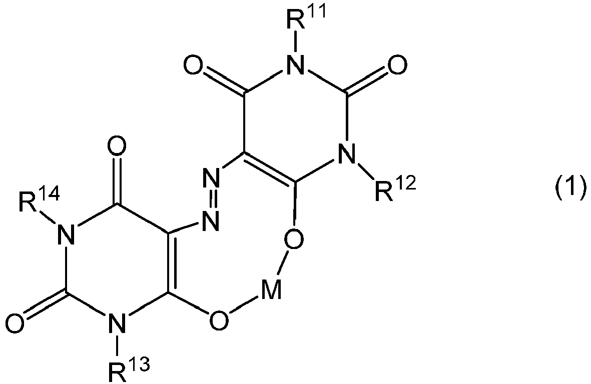 wherein M is a divalent metal element, and R¹¹ to R¹⁴ are each independently either a hydrogen atom or an alkyl group.
[2] An interlayer film for laminated glass including one or more colorants, wherein
   the colorant includes a colorant (Y) having a structure represented by the following formula (1), and
   a D50 of an entire colorant in the interlayer film for laminated glass measured by a transmission electron microscope is 180 nm or less, 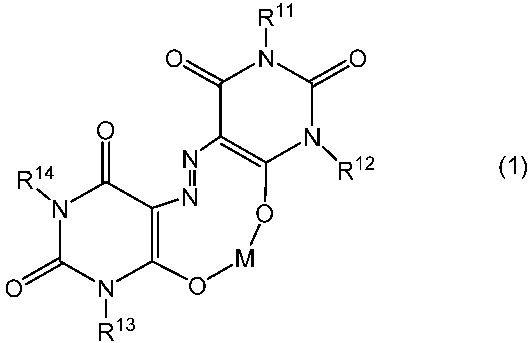 wherein M is a divalent metal element, and R¹¹ to R¹⁴ are each independently either a hydrogen atom or an alkyl group.
[3] The interlayer film for laminated glass according to the above [1] or [2], wherein the colorant (Y) has a D90 of 160 nm or less as measured by a transmission electron microscope.
[4] The interlayer film for laminated glass according to any one of the above [1] to [3], wherein a D90 of the entire colorant in the interlayer film for laminated glass measured by a transmission electron microscope is 180 nm or less.
[5] The interlayer film for laminated glass according to any one of the above [1] to [4], wherein ΔE is 5 or less when laminated glass made by adhering two clear glass plates to each other via the interlayer film for laminated glass is irradiated with light from a xenon light source in which an accumulated amount of light at 300 to 400 nm is 60 W/m², under conditions of a temperature of 63°C and a humidity of 50% RH for 2000 h.
[6] The interlayer film for laminated glass according to any one of the above [1] to [5], wherein L* and haze measured for laminated glass made by adhering two clear glass plates to each other via the interlayer film for laminated glass are 85 or more and 94 or less and 1.2% or less respectively.
[7] The interlayer film for laminated glass according to any one of the above [1] to [5], wherein L* and haze measured for laminated glass made by adhering two clear glass plates to each other via the interlayer film for laminated glass are less than 85 and 2.5% or less respectively.
[8] The interlayer film for laminated glass according to any one of the above [1] to [7], wherein the colorant further includes further at least either of a colorant (R) having a local maximum absorption wavelength at 480 nm or more and less than 580 nm and a colorant (B) having a local maximum absorption wavelength at 580 nm or more and 780 nm or less.
[9] The interlayer film for laminated glass according to any one of the above [1] to [8], wherein the colorant includes a carbon material.
[10] The interlayer film for laminated glass according to any one of the above [1] to [9], wherein in laminated glass made by adhering two clear glass plates to each other via the interlayer film for laminated glass, transmittance at a local maximum absorption wavelength of 380 nm or more and less than 480 nm is lower than transmittance at a local maximum absorption wavelength of 480 nm or more and less than 580 nm and transmittance at a local maximum absorption wavelength of 580 nm or more and 780 nm or less.
[11] The interlayer film for laminated glass according to any one of the above [1] to [10], wherein a content of the colorant (Y) is 0.0001% by mass or more and 0.5% by mass or less.
[12] The interlayer film for laminated glass according to any one of the above [1] to [11], containing a colorant other than the colorant (Y).
[13] The interlayer film for laminated glass according to the above [12], including a pigment as the colorant other than the colorant (Y), wherein a D50 of the pigment is 180 nm or less.
[14] The interlayer film for laminated glass according to the above [12] or [13], including a pigment as the colorant other than the colorant (Y), wherein a D90 of the pigment is 360 nm or less.
[15] The interlayer film for laminated glass according to any one of the above [1] to [14], wherein a content of the colorant other than the colorant (Y) is 0.3% by mass or less.
[16] The interlayer film for laminated glass according to any one of the above [1] to [15], wherein a total content of the colorant in the interlayer film is 0.0001% by mass or more and 0.7% by mass or less.
[17] The interlayer film for laminated glass according to any one of the above [1] to [16], including a thermoplastic resin.
[18] The interlayer film for laminated glass according to any one of the above [1] to [17], wherein the thermoplastic resin is at least one selected from the group consisting of a polyvinyl acetal resin, an ethylene-vinyl acetate copolymer resin, an ionomer resin, a polyurethane resin, a thermoplastic elastomer, an acrylic resin, an acrylic-vinyl acetate copolymer resin, a polyvinyl alcohol resin, a polyolefin resin, a polyvinyl acetate resin, and a polystyrene resin.
[19] The interlayer film for laminated glass according to the above [17] or [18], wherein the thermoplastic resin is a polyvinyl acetal resin.
[20] The interlayer film for laminated glass according to any one of the above [17] to [19], further including a plasticizer.
[21] The interlayer film for laminated glass according to any one of the above [1] to [20], containing at least one additive selected from the group consisting of an ultraviolet absorbent, an antioxidant, and a light stabilizing agent.
[22] The interlayer film for laminated glass according to any one of the above [1] to [21], containing an adhesion modifier.
[23] The interlayer film for laminated glass according to any one of the above [1] to [22], containing a heat shielding agent.
[24] The interlayer film for laminated glass according to any one of the above [1] to [23], having a single-layer structure including a single-layer resin layer.
[25] The interlayer film for laminated glass according to any one of the above [1] to [23], having a multilayer structure including a plurality of resin layers, wherein of the plurality of the resin layers, at least one resin layer includes the colorant (Y).
[26] The interlayer film for laminated glass according to the above [25], having first, second, and third resin layers, wherein the second resin layer is provided on one surface side of the first resin layer, the third resin layer is provided on the other surface side of the first resin layer, and at least the first resin layer includes the colorant (Y).
[27] The interlayer film for laminated glass according to the above [25] or [26], having a multilayer structure including a plurality of resin layers, wherein of the plurality of resin layers, a colored resin layer including the colorant (Y) is provided in a partial region of the interlayer film.
[28] The interlayer film for laminated glass according to any one of the above [1] to [27], wherein a cross section has a wedge shape.
[29] The interlayer film for laminated glass according to any one of the above [1] to [28], wherein a thickness of the interlayer film is 0.2 mm or more and 2.0 mm or less.
[30] The interlayer film for laminated glass according to any one of the above [1] to [29], having a colored resin layer including the colorant (Y), wherein a thickness of the colored resin layer is 0.01 or more and 1 or less to a total thickness of the interlayer film in thickness ratio (colored resin layer/total thickness).
[31] Laminated glass including the interlayer film for laminated glass according to any one of the above [1] to [30] and a pair of glass plates, wherein the interlayer film for laminated glass is disposed between the glass plates.

### Advantageous Effects of Invention

According to the present invention, it is possible to provide an interlayer film for laminated glass and laminated glass that have low haze and high weather resistance, and can maintain high designability even if used under sunlight irradiation or under high temperature for a long period.

### Brief Description of Drawings

[Fig. 1] Fig. 1 is a cross-sectional view of an interlayer film for laminated glass according to a first embodiment.
[Fig. 2] Fig. 2 is a cross-sectional view of an interlayer film for laminated glass according to a second embodiment.
[Fig. 3] Fig. 3 is a cross-sectional view of an interlayer film for laminated glass according to a third embodiment.
[Fig. 4] Fig. 4 is a cross-sectional view of an interlayer film for laminated glass according to a fourth embodiment.
[Fig. 5] Fig. 5 is a cross-sectional view of an interlayer film for laminated glass according to a fifth embodiment.
[Fig. 6] Fig. 6 is a cross-sectional view of an interlayer film for laminated glass according to a sixth embodiment.
[Fig. 7] Fig. 7 is a schematic cross-sectional view showing one example of a wedge-shaped interlayer film for laminated glass.
[Fig. 8] Fig. 8 is a schematic cross-sectional view showing one example of a wedge-shaped interlayer film for laminated glass.
[Fig. 9] Fig. 9 is a schematic cross-sectional view showing one example of a wedge-shaped interlayer film for laminated glass.
[Fig. 10] Fig. 10 is a schematic cross-sectional view showing one example of a wedge-shaped interlayer film for laminated glass having a multilayer structure.

### Description of Embodiments

The present invention will be described in more detail below.

### [Colorant (Y)]

The interlayer film for laminated glass (hereinafter sometimes simply referred to as an "interlayer film") according to the present invention includes one or more colorants, and the colorant includes a colorant having a structure represented by formula (1) (hereinafter also referred to as a "colorant (Y)"). The interlayer film contains the colorant (Y) having the following structure, and thus as described later, even if the particle diameter of the colorant (Y) is decreased, the weather resistance can be made good, and discoloration and the like are less likely to occur and high designability is easily maintained even if the interlayer film is used under sunlight irradiation or under high temperature for a long period. 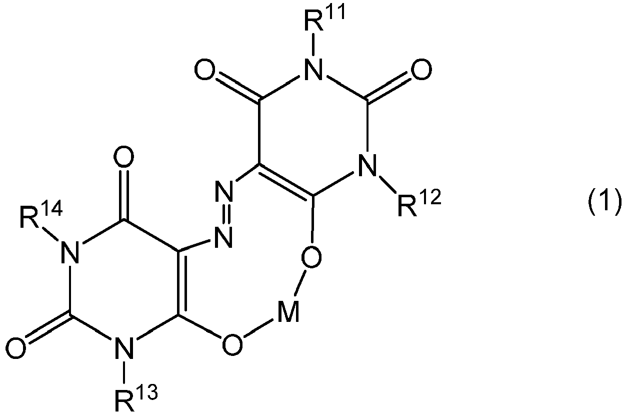 wherein M is a divalent metal element, and R¹¹ to R¹⁴ are each independently either a hydrogen atom or an alkyl group.

The divalent metal element for M is Ni, Co, Fe, Cu, Mn, Zn, or V, and Ni is most preferred.

The alkyl groups for R¹¹ to R¹⁴ are alkyl groups having 1 to 18 carbon atoms and are preferably alkyl groups having 1 to 8 carbon atoms, more preferably 1 to 4 carbon atoms, further preferably 1 to 2 carbon atoms, and most preferably 1 carbon atom. For R¹¹ to R¹⁴, it is preferred that at least one be a hydrogen atom, and from the viewpoint of being able to easily produce the colorant (Y), it is more preferred that all be hydrogen atoms.

The alkyl groups for R¹¹ to R¹⁴ may be linear or branched or may have a cyclic structure. Examples of the alkyl groups include methyl groups, ethyl groups, various propyl groups, various butyl groups, various pentyl groups, various hexyl groups, various heptyl groups, various octyl groups, various nonyl groups, various decyl groups, various undecyl groups, various dodecyl groups, various tridecyl groups, various tetradecyl groups, various pentadecyl groups, various hexadecyl groups, various heptadecyl groups, and various octadecyl groups. "Various" indicates including groups having any branched and cyclic structures, in addition to a group having a linear structure.

Specific examples of the colorant (Y) include Pigment Yellow 150. Pigment Yellow 150 is a compound in which in formula (1), M is Ni (nickel), and all of R¹¹ to R¹⁴ are hydrogen atoms.

One colorant (Y) may be used singly, or two or more colorants (Y) may be used in combination.

The colorant (Y) is a pigment and is present in the interlayer film in the form of particles. In one aspect of the present invention, the colorant (Y) has a D50 of 160 nm or less as measured by a transmission electron microscope. When the D50 of the colorant (Y) is larger than 160 nm, the haze of laminated glass made using the interlayer film increases, and trouble, such as being unable to make coloration with the colorant (Y) vivid, also occurs easily.

The D50 of the colorant (Y) is preferably 150 nm or less, more preferably 125 nm or less, further preferably 110 nm or less, still further preferably 90 nm or less, and particularly preferably 50 nm or less from the viewpoint of decreasing the haze to more easily make coloration with the colorant vivid. The D50 of the colorant (Y) is suitable to be as small as possible in order to decrease the haze, but is preferably 5 nm or more, more preferably 10 nm or more, further preferably 20 nm or more, and still further preferably 30 nm or more from the viewpoint of making the weather resistance good and making the adjustment of the particle diameter of the colorant (Y) easy.

The colorant (Y) preferably has a D90 of 160 nm or less as measured by a transmission electron microscope. When the D90 of the colorant (Y) is 160 nm or less, coarse particles are less likely to be contained in the colorant (Y), and the haze of laminated glass made with the interlayer film is still more easily decreased.

The D90 of the colorant (Y) is more preferably 150 nm or less, further preferably 130 nm or less, still further preferably 115 nm or less, and particularly preferably 90 nm or less from the viewpoint of decreasing the haze to more easily make coloration with the colorant vivid. The D90 of the colorant (Y) is suitable to be as small as possible in order to decrease the haze, but is preferably 10 nm or more, more preferably 20 nm or more, further preferably 30 nm or more, and still further preferably 40 nm or more from the viewpoint of weather resistance and the viewpoint of the ease of the adjustment of the particle diameter of the colorant (Y).

In the measurement of the D50 and D90 of the colorant (Y), first, the interlayer film is cut, the cut surface is photographed by a transmission electron microscope (TEM), and the major axis of each of 100 or more colorant (Y) particles is measured as the particle diameter to obtain the particle diameter distribution. In the particle diameter distribution, the particle diameter at which the number frequency accumulation is 50% is D50, and the particle diameter at which the number frequency accumulation is 90% is D90.

The colorant (Y) preferably has a local maximum absorption wavelength at 380 nm or more and less than 480 nm, and it is more preferred that at least one local maximum absorption wavelength of 380 nm or more and less than 480 nm be in the wavelength region of 400 nm or more and 460 nm or less. The colorant (Y) is usually a yellow colorant.

As used herein, the local maximum absorption wavelength of each colorant can be measured, for example, by the following method. Each colorant is dispersed in triethylene glycol bis(2-ethylhexanoate, and then mixed so that the amount of triethylene glycol di-2-ethylhexanoate is 40 parts by mass, and the amount of the colorant to be measured is 0.0002 to 0.1 parts by mass, based on 100 parts by mass of a polyvinyl butyral resin (degree of acetalization 69 mol %, amount of hydroxyl groups 30 mol %, degree of acetylation 1 mol %, average degree of polymerization of PVA used for synthesis 1700), and extruded using an extruder to obtain a 760 µm thick interlayer film. The obtained interlayer film is sandwiched between two standard clear glasses described herein 2.5 mm thick to form a laminated body. With the obtained laminated body, laminated glass is made using temporary pressure bonding and an autoclave. The making of laminated glass should be performed by the same procedure as Examples. For the laminated glass made, the transmittance at 300 to 2500 nm is measured using a spectrophotometer (for example, "U4100" manufactured by Hitachi, Ltd.) to obtain the local maximum absorption wavelength. The local maximum absorption wavelength is the wavelength at which the transmittance shows the local minimum value, and a plurality of local maximum absorption wavelengths may be present.

The content of the colorant (Y) in the interlayer film should be appropriately selected so that laminated glass can be suitably colored the desired color, but is, for example, 0.0001% by mass or more, preferably 0.001% by mass or more, further preferably 0.002% by mass or more, and still further preferably 0.003% by mass or more from the viewpoint of obtaining laminated glass having high designability.

The content of the colorant (Y) in the interlayer film is, for example, 0.5% by mass or less, preferably 0.3% by mass or less, further preferably 0.2% by mass or less, and still further preferably 0.1% by mass or less. When the content of the colorant (Y) in the interlayer film is equal to or less than the upper limit values, moderate coloration is easily ensured while the weather resistance is made good.

In either of the case where the interlayer film is a single-layer structure and the case where the interlayer film is a multilayer structure, the content of the colorant (Y) in the interlayer film means the content of the colorant (Y) based on the entire single-layer structure or multilayer structure (that is, at the total thickness also including the thickness of a resin layer containing no colorant (Y) when the interlayer film includes the resin layer). When the interlayer film has a non-colored region and a colored region as described later, the content of the colorant (Y) in the interlayer film means the content of the colorant (Y) in the colored region. Further, when the content of the colorant (Y) changes from position to position, such as when the colored region has a gradation region, the content of the colorant (Y) in the interlayer film is the content of the colorant (Y) at the position where the content of the colorant (Y) is highest.

The same applies to the content of a colorant other than the colorant (Y) and the total content of the colorant in the interlayer film described later. For example, when the interlayer film has a non-colored region and a colored region, the content of the colorant other than the colorant (Y) and the total content of the colorant in the interlayer film mean the content of the colorant other than the colorant (Y) and the total content of the colorant in the colored region. Further, when the content of the colorant (Y) changes from position to position, such as when the colored region has a gradation region, the content of the colorant other than the colorant (Y) and the total content of the colorant in the interlayer film means the content of the colorant other than the colorant (Y) and the total content of the colorant at the position where the content of the colorant (Y) is highest. The same applies to the content of a heat shielding agent described later.

### [Colorant Other Than Colorant (Y)]

In the interlayer film of the present invention, the colorant may consist of the colorant (Y) but may contain a colorant other than the colorant (Y). The colorant other than the colorant (Y) may be a dye, a pigment, or a combination thereof. When the colorant (Y) is contained in only a partial region of the interlayer film, the colorant other than the colorant (Y) is preferably contained in the region in which the colorant (Y) is contained (colored region).

Examples of the colorant other than the colorant (Y) include a colorant having a local maximum absorption wavelength at 480 nm or more and less than 580 nm (hereinafter sometimes referred to as a colorant (R)), a colorant having a local maximum absorption wavelength at 580 nm or more and 780 nm or less (hereinafter sometimes referred to as a colorant (B)), a carbon material, and a colorant having a local maximum absorption wavelength at 380 nm or more and less than 480 nm other than the colorant (Y) (hereinafter sometimes referred to as a colorant (y)).

The colorant other than the colorant (Y) may not have a local maximum absorption wavelength at 380 nm or more and 780 nm or less. For example, yellow Colour Index colorants such as Pigment Yellow 154, Pigment Yellow 151, and Pigment Yellow 180 are included in the colorant (y) herein though they are colorants having no such a local maximum absorption wavelength.

One colorant other than the colorant (Y) may be used singly, or two or more colorants other than the colorant (Y) may be used in combination.

The colorant (R) should have a local maximum absorption wavelength at 480 nm or more and less than 580 nm and is preferably a red or magenta-based colorant. It is more preferred that at least one local maximum absorption wavelength of 480 nm or more and less than 580 nm be in the wavelength region of 500 nm or more and 560 nm or less.

The colorant (B) should have a local maximum absorption wavelength at 580 nm or more and 780 nm or less and is preferably a blue or cyan-based colorant. It is more preferred that at least one local maximum absorption wavelength of 580 nm or more and 780 nm or less be in the wavelength region of 590 nm or more and 730 nm or less.

The interlayer film may contain at least one or both of the colorant (R) and the colorant (B) in addition to the colorant (Y). When in addition to the colorant (Y), the colorant (R), the colorant (B), or both of these are further contained in the interlayer film, laminated glass can be colored various colors with yellow and another color mixed.

The colorant (R) may be either of a dye and a pigment, and examples of the dye include an anthraquinone-based dye such as Solvent Red 146, an imidazole-based dye such as Solvent Red 197, and an azo dye such as Solvent Red 1.

Examples of the pigment of the colorant (R) include a perylene-based pigment such as Pigment Red 149, a diketopyrrolopyrrole-based pigment such as Pigment Violet 254, an threne-based pigment, a quinacridone pigment such as Pigment Red 202, a metal oxide-based pigment, and a composite metal oxide-based pigment. Among these, a quinacridone-based pigment is preferred.

Examples of the quinacridone-based pigment include quinacridone, chlorinated quinacridone in which a hydrogen atom of the quinacridone skeleton is replaced by a chlorine atom, and an alkyl-substituted quinacridone in which a hydrogen atom of the quinacridone skeleton is replaced by an alkyl group such as a methyl group. Examples of the quinacridone pigment include Pigment Red 122, Pigment Red 202, Pigment Red 207, Pigment Red 209, and Pigment Violet 19 by Colour Index Names.

The colorant (B) may be either of a dye and a pigment, and examples the dye include an anthraquinone-based dye, an anthraquinone-based dye, an azobenzene-based dye, and a phthalocyanine-based dye. Examples of the pigment include a phthalocyanine-based pigment such as a copper phthalocyanine pigment such as Pigment Blue 15-1 or Pigment Blue 15-3, or a cobalt phthalocyanine pigment, an indigo-based pigment, an anthraquinone-based pigment, an indanthrene-based pigment, and a composite metal oxide-based pigment.

The colorant (y) is other than the colorant having the structure represented by formula (1) and should have a local maximum absorption wavelength at 380 nm or more and less than 480 nm. It is preferred that at least one local maximum absorption wavelength of 380 nm or more and less than 480 nm of the colorant (y) be in the wavelength region of 400 nm or more and 460 nm or less.

The colorant (y) may be either of a dye and a pigment, and examples of the dye include an anthraquinone-based dye, an azo dye such as Solvent Yellow 16, a coumarin-based dye, and a benzotriazole-based dye. Examples of the pigment include an isoindoline-based pigment such as Pigment Yellow 110, an azo pigment such as a monoazo or diazo pigment, and a benzimidazolone-based pigment. Examples of the azo pigment include Pigment Yellow 93.

The carbon material is used as a black colorant, and examples of the carbon material include graphene, graphite, carbon black, and carbon nanotubes. The black colorant used as the colorant other than the colorant (Y) may be an aniline black pigment, a composite metal oxide-based pigment, or the like. Among these, carbon black is preferred. As used herein, the carbon material is one of pigments.

By using the carbon material in combination with the colorant (Y) or the colorant (Y) and the colorant other than the colorant (Y), laminated glass can be made blackish colored glass, and a sense of high quality is easily provided to laminated glass. Heat shielding properties and light blocking properties are also easily provided.

When the colorant other than the colorant (Y) is a pigment, smaller D50 is suitable from the viewpoint of decreasing the haze of laminated glass made using the interlayer film.

Specifically, the D50 of the colorant (pigment) other than the colorant (Y) measured by a transmission electron microscope is preferably 180 nm or less, more preferably 165 nm or less, further preferably 150 nm or less, still further preferably 130 nm or less, still further preferably 100 nm or less, and particularly preferably 80 nm or less. The D50 of the colorant (pigment) other than the colorant (Y) is preferably 5 nm or more, more preferably 10 nm or more, further preferably 20 nm or more, and still further preferably 30 nm or more from the viewpoint of making the weather resistance good and making the adjustment of the particle diameter of the colorant other than the colorant (Y) easy.

When two or more pigments are used as the colorant other than the colorant (Y), the D50 of each pigment is preferably within the range.

When the colorant other than the colorant (Y) is a pigment, smaller D90 is suitable from the viewpoint of coarse particles being less likely to be contained, decreasing the haze of laminated glass made using the interlayer film. Specifically, the D90 of the colorant (pigment) other than the colorant (Y) measured by a transmission electron microscope is preferably 360 nm or less, more preferably 250 nm or less, further preferably 180 nm or less, still further preferably 165 nm or less, and still further preferably 140 nm or less. The D90 of the colorant (pigment) other than the colorant (Y) is suitable to be as small as possible in order to decrease the haze, but is preferably 15 nm or more, more preferably 30 nm or more, further preferably 45 nm or more, and still further preferably 60 nm or more from the viewpoint of weather resistance and the viewpoint of the ease of the adjustment of the particle diameter of the colorant.

When two or more pigments are used as the colorant other than the colorant (Y), the D90 of each pigment is preferably within the range.

The content of the colorant other than the colorant (Y) in the interlayer film should be appropriately selected so that laminated glass can be suitably colored the desired color, but is, for example, 0.00001% by mass or more, preferably 0.0001% by mass or more, further preferably 0.001% by mass or more, and still further preferably 0.003% by mass or more from the viewpoint of obtaining laminated glass having high designability.

The content of the colorant other than the colorant (Y) in the interlayer film is, for example, 0.3% by mass or less, preferably 0.2% by mass or less, further preferably 0.1% by mass or less, and still further preferably 0.05% by mass or less. When the content of the colorant (Y) in the interlayer film is equal to or less than the upper limit values, suitable coloration can be ensured in the amount of the colorant corresponding to the content.

The content of the colorant other than the colorant (Y) in the interlayer film is not particularly limited and may be lower or higher than or the same as the content of the colorant (Y) but is preferably lower than the content of the colorant (Y). By setting the content of the colorant other than the colorant (Y) lower than the content of the colorant (Y), laminated glass is easily colored yellow or a yellowish color.

The content of the colorant other than the colorant (Y) is a total content of the colorant other than the colorant (Y).

### [D50(T) and D90(T) of Entire Colorant]

In one aspect of the present invention, the colorant in the interlayer film has a D50 (hereinafter also referred to as D50(T)) of 180 nm or less as measured by a transmission electron microscope. The D50(T) of the colorant in the interlayer film means the D50 of the entire colorant also including the colorant other than the colorant (Y), in addition to the colorant (Y). The same applies to D90(T) described later.

When the D50(T) of the entire colorant used in the interlayer film is larger than 180 nm, the haze of laminated glass made using the interlayer film increases, and trouble, such as being unable to make coloration with the colorant vivid, also occurs easily.

In the interlayer film of the present invention, it is preferred that the D50(T) be 180 nm or less, and the D50 of the colorant (Y) be 160 nm or less, but it is not always necessary that the D50(T) be 180 nm or less, and the D50 be 160 nm or less, and at least either one requirement should be satisfied.

The D50(T) of the entire colorant in the interlayer film is preferably 165 nm or less, more preferably 150 nm or less, further preferably 130 nm or less, still further preferably 100 nm or less, and particularly preferably 80 nm or less from the viewpoint of decreasing the haze to easily make coloration with the colorant vivid.

The D50(T) of the entire colorant is suitable to be as small as possible in order to decrease the haze, but is preferably 5 nm or more, more preferably 10 nm or more, further preferably 20 nm or more, and still further preferably 30 nm or more from the viewpoint of weather resistance and the viewpoint of easily adjusting the particle diameter of the colorant.

For the colorant, as the D90 measured by a transmission electron microscope becomes smaller, coarse particles are less likely to be contained, and the haze of laminated glass made with the interlayer film is still more easily decreased. From such a viewpoint, the D90 (hereinafter also referred to as "D90(T)") of the entire colorant in the interlayer film measured by a transmission electron microscope is, for example, 250 nm or less, preferably 180 nm or less, more preferably 160 nm or less, further preferably 140 nm or less, still further preferably 120 nm or less, and particularly preferably 90 nm or less. The D90(T) of the entire colorant is suitable to be as small as possible in order to decrease the haze, but is preferably 10 nm or more, more preferably 20 nm or more, further preferably 30 nm or more, and still further preferably 40 nm or more from the viewpoint of weather resistance and the viewpoint of easily adjusting the particle diameter of the colorant.

In the measurement of the D50(T) and D90(T) of the entire colorant, first, the interlayer film is cut, the cut surface is photographed by a transmission electron microscope (TEM), and the major axes of 100 or more colorant particles contained in the interlayer film are measured as the particle diameters to obtain the particle diameter distribution. In the particle diameter distribution, the particle diameter at which the number frequency accumulation is 50% is D50(T), and the particle diameter at which the number frequency accumulation is 90% is D90(T). When the colorant in the interlayer film consists of the colorant (Y), the D50(T) is the same as the D50 of the colorant (Y). But when the colorant in the interlayer film also contains a colorant other than the colorant (Y), the D50(T) means the D50 of a mixture of the colorant (Y) and the colorant other than the colorant (Y). The same applies to D90.

The total content of the colorant in the interlayer film should be appropriately selected so that laminated glass can be suitably colored the desired color, but is, for example, 0.0001% by mass or more, preferably 0.001% by mass or more, further preferably 0.002% by mass or more, and still further preferably 0.003% by mass or more from the viewpoint of obtaining laminated glass having high designability.

The total content of the colorant in the interlayer film is, for example, 0.7% by mass or less, preferably 0.5% by mass or less, further preferably 0.3% by mass or less, and still further preferably 0.15% by mass or less. When the content of the colorant in the interlayer film is equal to or less than the upper limit values, the weather resistance is easily improved while moderate coloration is ensured.

### [Resin Layer]

The interlayer film of the present invention contains a resin, and a thermoplastic resin is preferably used as the resin. The interlayer film includes one or two or more resin layers, and each resin layer contains a resin. For the resin used in each resin layer, a thermoplastic resin is preferred. By containing the thermoplastic resin, the interlayer film easily serves the function as an adhesive layer, and the adhesiveness to glass plates is good.

In the interlayer film of the present invention, at least one of the plurality of resin layers includes the colorant (Y) in addition to the resin. As used herein, a resin layer containing a colorant (Y) is referred to as a "colored resin layer", and a resin layer colored with only a material other than a "colorant (Y)" is not taken as a "colored resin layer". In the colored resin layer, the colorant (Y) is dispersed in the resin.

When the interlayer film contains a colorant other than the colorant (Y), the colored resin layer preferably contains the colorant other than the colorant (Y), in addition to the colorant (Y). However, when a plurality of resin layers are provided, the colorant other than the colorant (Y) may be contained in a resin layer other than the colored resin layer.

When the colorant other than the colorant (Y) is contained in the colored resin layer, the colorant other than the colorant (Y) is dispersed in the resin together with the colorant (Y). Also when the colorant other than the colorant (Y) is contained in a resin layer other than the colored resin layer, the colorant other than the colorant (Y) should be dispersed in the resin layer other than the colored resin layer.

The thermoplastic resin in each resin layer is not particularly limited, and examples thereof include a polyvinyl acetal resin, an ethylene-vinyl acetate copolymer resin, an ionomer resin, a polyurethane resin, a thermoplastic elastomer, an acrylic resin, an acrylic-vinyl acetate copolymer resin, a polyvinyl alcohol resin, a polyolefin resin, a polyvinyl acetate resin, and a polystyrene resin. By using these resins, adhesiveness to glass plates is easily ensured.

In the interlayer film of the present invention, one thermoplastic resin may be used singly, or two or more thermoplastic resins may be used in combination. When two or more thermoplastic resins are used in combination, the two or more thermoplastic resins may be contained in one resin layer, or different types of thermoplastic resins may be contained in different resin layers respectively, in the interlayer film.

Of these, at least one selected from the group consisting of a polyvinyl acetal resin and an ethylene-vinyl acetate copolymer resin is preferred, and a polyvinyl acetal resin is more preferred in terms of exhibiting excellent adhesiveness to glass, particularly when it is used in combination with a plasticizer. Therefore, also for the resin in the colored resin layer, at least one selected from the group consisting of a polyvinyl acetal resin and an ethylene-vinyl acetate copolymer resin is preferred, and a polyvinyl acetal resin is more preferred.

When the interlayer film has a plurality of resin layers, the resins constituting the resin layers should be appropriately selected from the resins listed above. The resins constituting the resin layers may be different resins from each other but are preferably the same as each other.

Therefore, when the interlayer film has a plurality of resin layers, the resins constituting the resin layers are each preferably a polyvinyl acetal resin or an ethylene-vinyl acetate copolymer resin, more preferably a polyvinyl acetal resin.

### (Polyvinyl Acetal Resin)

The polyvinyl acetal resin is not particularly limited as long as it is a polyvinyl acetal resin obtained by acetalizing polyvinyl alcohol (PVA) with an aldehyde.

The aldehyde is not particularly limited, but generally, an aldehyde having 1 to 10 carbon atoms is preferably used. The aldehyde having 1 to 10 carbon atoms is not particularly limited, and examples thereof include n-butyraldehyde, isobutyraldehyde, n-valeraldehyde, 2-ethylbutyraldehyde, n-hexylaldehyde, n-octylaldehyde, n-nonylaldehyde, n-decylaldehyde, formaldehyde, acetaldehyde, and benzaldehyde. These aldehydes may be used singly, or two or more of these aldehydes may be used in combination.

Among the above, n-butyraldehyde, n-hexylaldehyde, and n-valeraldehyde are preferred, and n-butyraldehyde is more preferred. Therefore, for the polyvinyl acetal resin, a polyvinyl butyral resin is preferred.

Polyvinyl alcohol (PVA) is obtained, for example, by saponifying a polyvinyl ester such as polyvinyl acetate. The degree of saponification of polyvinyl alcohol is generally 70 to 99.9 mol %. One polyvinyl acetal resin may be used singly, or two or more polyvinyl acetal resins may be used in combination.

The average degree of polymerization of PVA is preferably 200 or more, more preferably 500 or more, further preferably 1000 or more, and still further preferably 1500 or more. When the average degree of polymerization is equal to or more than the lower limits, the penetration resistance of laminated glass increases. The average degree of polymerization of PVA is preferably 5000 or less, more preferably 4000 or less, further preferably 3500 or less, and still further preferably 2500 or less.

The average degree of polymerization of polyvinyl alcohol is obtained by a method in accordance with JIS K6726 "Testing methods for polyvinyl alcohol".

The amount of hydroxyl groups in the polyvinyl acetal resin is preferably 15 mol % or more and preferably 38 mol % or less. By setting the amount of hydroxyl groups at 15 mol % or more, the adhesiveness easily becomes good, and the penetration resistance of laminated glass, and the like are easily made good. By setting the amount of hydroxyl groups at 38 mol % or less, laminated glass is prevented from being too hard. The amount of hydroxyl groups is more preferably 20 mol % or more, further preferably 25 mol % or more, from the viewpoint of adhesiveness to glass plates, and the like. The amount of hydroxyl groups is more preferably 35% or less, further preferably 33 mol % or less.

Also when a polyvinyl butyral resin is used as the polyvinyl acetal resin, the amount of hydroxyl groups is 15 mol % or more and preferably 38 mol % or less, and more preferably 20 mol % or more, further preferably 25 mol % or more, and more preferably 35% mol or less, further preferably 33 mol % or less, from the same viewpoints.

The amount of hydroxyl groups in the polyvinyl acetal resin is the value, expressed in percentage, of the mole fraction obtained by dividing the amount of ethylene groups to which hydroxyl groups are bonded, by the amount of all ethylene groups in the main chain. The amount of ethylene groups to which hydroxyl groups are bonded can be measured, for example, in accordance with JIS K6728 "Testing methods for polyvinyl butyral".

The degree of acetalization of the polyvinyl acetal resin is preferably 47 mol % or more and preferably 85 mol % or less. The degree of acetalization is more preferably 55 mol % or more, further preferably 60 mol % or more, and more preferably 80 mol % or less, further preferably 75 mol % or less.

The degree of acetalization means the degree of butyralization when the acetal group is a butyral group, and the polyvinyl acetal resin (A) is a polyvinyl butyral resin.

The degree of acetalization is the value, expressed in percentage, of the mole fraction obtained by subtracting the amount of ethylene groups to which hydroxyl groups are bonded and the amount of ethylene groups to which acetyl groups are bonded from the amount of all ethylene groups in the main chain and dividing the obtained value by the amount of all ethylene groups in the main chain. The degree of acetalization (degree of butyralization) should be calculated, for example, from the results measured by a method in accordance with JIS K6728 "Testing methods for polyvinyl butyral".

The degree of acetylation of the polyvinyl acetal resin is preferably 30 mol % or less, more preferably 20 mol % or less, further preferably 10 mol % or less, and still further preferably 2 mol % or less. When the degree of acetylation is equal to or less than the upper limits, the moisture resistance of the interlayer film and laminated glass increases. The degree of acetylation is not particularly limited but is preferably 0.01 mol % or more, more preferably 0.1 mol % or more.

The degree of acetylation is the value, expressed in percentage, of the mole fraction obtained by dividing the amount of ethylene groups to which acetyl groups are bonded, by the amount of all ethylene groups in the main chain. The amount of ethylene groups to which acetyl groups are bonded can be measured, for example, in accordance with JIS K6728 "Testing methods for polyvinyl butyral".

### (Ethylene-Vinyl Acetate Copolymer Resin)

The ethylene-vinyl acetate copolymer resin may be a non-crosslinked ethylene-vinyl acetate copolymer resin and may be a high temperature crosslinked ethylene-vinyl acetate copolymer resin. As the ethylene-vinyl acetate copolymer resin, an ethylene-vinyl acetate modified product resin such as an ethylene-vinyl acetate copolymer saponified product or a hydrolysate of ethylene-vinyl acetate can also be used.

The ethylene-vinyl acetate copolymer resin preferably has a vinyl acetate content of 10 to 50% by mass, more preferably 20 to 40% by mass, as measured in accordance with JIS K 6730 "Testing methods for ethylene/vinyl acetate copolymer materials" or JIS K 6924-2: 1997. By setting the vinyl acetate content at these lower limit values or more, the adhesiveness to glass increases, and the penetration resistance of laminated glass easily becomes good. By setting the vinyl acetate content at these upper limit values or less, the breaking strength of the interlayer film increases, and the impact resistance of laminated glass is good.

### (Ionomer Resin)

The ionomer resin is not particularly limited, and various ionomer resins can be used. Specific examples include an ethylene-based ionomer, a styrene-based ionomer, a perfluorocarbon-based ionomer, a telechelic ionomer, and a polyurethane ionomer. Among these, an ethylene-based ionomer is preferred in terms of good mechanical strength, durability, transparency, and the like of laminated glass and in terms of excellent adhesiveness to glass.

As the ethylene-based ionomer, an ionomer of an ethylene-unsaturated carboxylic acid copolymer is preferably used because it is excellent in transparency and toughness. The ethylene-unsaturated carboxylic acid copolymer is a copolymer having at least a constituent unit derived from ethylene and a constituent unit derived from an unsaturated carboxylic acid and may have a constituent unit derived from another monomer.

Examples of the unsaturated carboxylic acid include acrylic acid, methacrylic acid, and maleic acid. Acrylic acid and methacrylic acid are preferred, and methacrylic acid is particularly preferred. Examples of another monomer include an acrylate, a methacrylate, and 1-butene.

The ethylene-unsaturated carboxylic acid copolymer preferably has 75 to 99 mol % of the constituent unit derived from ethylene and preferably has 1 to 25 mol % of the constituent unit derived from the unsaturated carboxylic acid, based on 100 mol % of all constituent units of the copolymer.

The ionomer of the ethylene-unsaturated carboxylic acid copolymer is an ionomer resin obtained by neutralizing or crosslinking at least some of the carboxyl groups of the ethylene-unsaturated carboxylic acid copolymer with metal ions, and the degree of neutralization of the carboxyl groups is usually 1 to 90%, preferably 5 to 85%.

Examples of the ion source for the ionomer resin include alkali metals such as lithium, sodium, potassium, rubidium, and cesium, and polyvalent metals such as magnesium, calcium, and zinc. Sodium and zinc are preferred.

The method for producing the ionomer resin is not particularly limited, and the ionomer resin can be produced by a conventionally known production method. For example, when an ionomer of an ethylene-unsaturated carboxylic acid copolymer is used as the ionomer resin, for example, ethylene and an unsaturated carboxylic acid are subjected to radical copolymerization under high temperature and high pressure to produce an ethylene-unsaturated carboxylic acid copolymer. Then, the ethylene-unsaturated carboxylic acid copolymer is reacted with a metal compound including the ion source, and thus an ionomer of the ethylene-unsaturated carboxylic acid copolymer can be produced.

### (Polyurethane Resin)

Examples of the polyurethane resin include a polyurethane obtained by reacting an isocyanate compound with a diol compound, and a polyurethane obtained by reacting an isocyanate compound, a diol compound, and further a chain extender such as a polyamine. The polyurethane resin may contain a sulfur atom. In that case, part or all of the diol should be selected from the group consisting of a polythiol and a sulfur-containing polyol. The polyurethane resin can make the adhesiveness to organic glass good. Therefore, the polyurethane resin is preferably used when the glass plates are organic glass.

### (Thermoplastic Elastomer)

Examples of the thermoplastic elastomer include a styrene-based thermoplastic elastomer and an aliphatic polyolefin. The styrene-based thermoplastic elastomer is not particularly limited, and a known one can be used. The styrene-based thermoplastic elastomer generally has a styrene monomer polymer block that is a hard segment, and a conjugated diene compound polymer block or its hydrogenated block that is a soft segment. Specific examples of the styrene-based thermoplastic elastomer include a styrene-isoprene diblock copolymer, a styrene-butadiene diblock copolymer, a styrene-isoprene-styrene triblock copolymer, a styrene-butadiene/isoprene-styrene triblock copolymer, a styrene-butadiene-styrene triblock copolymer, and their hydrogenated products.

The aliphatic polyolefin may be a saturated aliphatic polyolefin or an unsaturated aliphatic polyolefin. The aliphatic polyolefin may be a polyolefin including a chain olefin as a monomer, or a polyolefin including a cyclic olefin as a monomer. From the viewpoint of effectively enhancing the storage stability and sound insulation properties of the interlayer film, the aliphatic polyolefin is preferably a saturated aliphatic polyolefin.

Examples of the material of the aliphatic polyolefin include ethylene, propylene, 1-butene, trans-2-butene, cis-2-butene, 1-pentene, trans-2-pentene, cis-2-pentene, 1-hexene, trans-2-hexene, cis-2-hexene, trans-3-hexene, cis-3-hexene, 1-heptene, trans-2-heptene, cis-2-heptene, trans-3-heptene, cis-3-heptene, 1-octene, trans-2-octene, cis-2-octene, trans-3-octene, cis-3-octene, trans-4-octene, cis-4-octene, 1-nonene, trans-2-nonene, cis-2-nonene, trans-3-nonene, cis-3-nonene, trans-4-nonene, cis-4-nonene, 1-decene, trans-2-decene, cis-2-decene, trans-3-decene, cis-3-decene, trans-4-decene, cis-4-decene, trans-5-decene, cis-5-decene, 4-methyl-1-pentene, and vinylcyclohexane.

### (Plasticizer)

When the interlayer film contains a thermoplastic resin, it may further contain a plasticizer. That is, the interlayer film has one or two or more resin layers, as described above, and each resin layer containing a thermoplastic resin may further contain a plasticizer.

By containing the plasticizer, the interlayer film is flexible and, as a result, improves the flexibility of laminated glass and also improves the penetration resistance. Further, it is also possible to exhibit high adhesiveness to glass plates. The plasticizer is particularly effective when contained when a polyvinyl acetal resin is used as the thermoplastic resin. Therefore, the resin layers such as the colored resin layer more preferably contain a polyvinyl acetal resin and a plasticizer.

Examples of the plasticizer include organic ester plasticizers such as a monobasic organic acid ester and a polybasic organic acid ester, and phosphorus-based plasticizers such as an organic phosphate-based plasticizer and an organic phosphite-based plasticizer. Among them, organic ester plasticizers are preferred.

Examples of the organic ester plasticizers include triethylene glycol di-2-ethylbutyrate, triethylene glycol di-2-ethylhexanoate, triethylene glycol dicaprylate, triethylene glycol di-n-octanoate, triethylene glycol di-n-heptanoate, tetraethylene glycol di-n-heptanoate, tetraethylene glycol di-2-ethylhexanoate, dibutyl sebacate, dioctyl azelate, dibutyl carbitol adipate, ethylene glycol di-2-ethylbutyrate, 1,3-propylene glycol di-2-ethylbutyrate, 1,4-butylene glycol di-2-ethylbutyrate, 1,2-butylene glycol di-2-ethylbutyrate, diethylene glycol di-2-ethylbutyrate, diethylene glycol di-2-ethylhexanoate, dipropylene glycol di-2-ethylbutyrate, triethylene glycol di-2-ethylpentanoate, tetraethylene glycol di-2-ethylbutyrate, diethylene glycol dicaprylate, triethylene glycol di-n-heptanoate, tetraethylene glycol di-n-heptanoate, triethylene glycol di-2-ethylbutyrate, dihexyl adipate, dioctyl adipate, hexylcyclohexyl adipate, diisononyl adipate, heptylnonyl adipate, dibutyl sebacate, an oil-modified sebacic alkyd, a mixture of a phosphate and an adipate, and a mixed adipate. Examples of the mixed adipate include an adipate made from two or more alcohols selected from the group consisting of an alkyl alcohol having 4 to 9 carbon atoms and a cyclic alcohol having 4 to 9 carbon atoms.

Among the plasticizers, triethylene glycol-di-2-ethylhexanoate (3GO) is particularly preferably used.

The content of the plasticizer of the interlayer film is not particularly limited but is preferably 10 parts by mass or more and preferably 100 parts by mass or less based on 100 parts by mass of the thermoplastic resin. When the content of the plasticizer is 10 parts by mass or more, laminated glass is moderately flexible, and the penetration resistance and the like are good. When the content of the plasticizer is 100 parts by mass or less, the separation of the plasticizer from the interlayer film is prevented. The content of the plasticizer is more preferably 20 parts by mass or more, further preferably 30 parts by mass or more, and further preferably 35 parts by mass or more, and more preferably 70 parts by mass or less, further preferably 63 parts by mass or less.

The interlayer film contains one or more resin layers, and when each resin layer contains the plasticizer, the preferred values of the content of the plasticizer in each resin layer are also the same as the preferred values of the content of the plasticizer described above.

In the interlayer film, the resin or the resin and the plasticizer are main components, and in the interlayer film, the total amount of the thermoplastic resin and the plasticizer is usually 70% by mass or more, preferably 80% by mass or more, and further preferably 90% by mass or more and less than 100% by mass based on the total amount of the interlayer film. By setting the total amount at less than 100% by mass, the interlayer film can contain an additive such as the colorant.

Also in each resin layer, the resin or the resin and the plasticizer are main components, and in each resin layer, the total amount of the thermoplastic resin and the plasticizer is usually 70% by mass or more, preferably 80% by mass or more, and further preferably 90% by mass or more and less than 100% by mass based on the total amount of each resin layer.

### [Other Additives]

The interlayer film of the present invention preferably contains at least one additive selected from the group consisting of an ultraviolet absorbent, an antioxidant, and a light stabilizing agent. When the interlayer film contains these additives, the weather resistance, the heat resistance, and the like are enhanced. Therefore, even after the interlayer film is used in an environment in which the interlayer film is irradiated with sunlight or the like, or in a high temperature environment for a long period, the deterioration of the colorant such as the colorant (Y) is suppressed, and high designability is easily maintained.

From the viewpoint of more enhancing the weather resistance, the interlayer film more preferably contains at least an ultraviolet absorbent and an antioxidant, further preferably all of an ultraviolet absorbent, an antioxidant, and a light stabilizing agent.

The interlayer film contains one or more resin layers, as described above, and the additives should be contained in at least one resin layer and is preferably contained in at least the colored resin layer. When the interlayer film is a multilayer structure, the additives may be contained in only the colored resin layer or may also be contained in another resin layer in addition to the colored resin layer.

The colored resin layer more preferably contains an ultraviolet absorbent and an antioxidant among the above, further preferably all of an ultraviolet absorbent, an antioxidant, and a light stabilizing agent. The resin layer other than the colored resin layer also more preferably contains an ultraviolet absorbent and an antioxidant, further preferably all of an ultraviolet absorbent, an antioxidant, and a light stabilizing agent.

### (Ultraviolet Absorbent)

As the ultraviolet absorbent, for example, a compound having a malonate skeleton, a compound having an oxalic acid anilide skeleton, a compound having a benzotriazole skeleton, a compound having a benzophenone skeleton, a compound having a triazine skeleton, a compound having a benzoate skeleton, a compound having a hindered amine skeleton or the like can be used. Among these, a compound having a benzotriazole skeleton (benzotriazole-based compound) is preferred.

The ultraviolet absorbent absorbs ultraviolet rays included in sunlight or the like to prevent the deterioration of the interlayer film and the colorant due to irradiation with sunlight or the like to improve the weather resistance.

Preferred specific examples of the benzotriazole-based compound include a compound represented by the following formula (2): 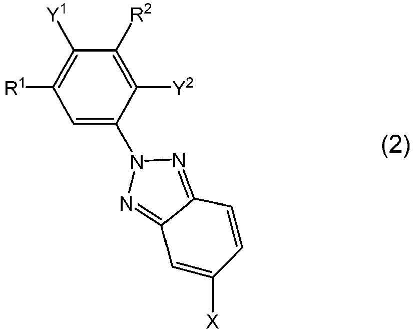 wherein R¹ represents a hydrogen atom, an alkyl group having 1 to 8 carbon atoms, or an alkoxycarbonylalkyl group having 4 to 20 carbon atoms, and R² represents a hydrogen atom or an alkyl group having 1 to 8 carbon atoms; X is a halogen atom or a hydrogen atom; and Y¹ and Y² are each independently a hydroxyl group or a hydrogen atom, and at least either one of Y¹ and Y² is a hydroxyl group.

In formula (2), the alkyl groups of R¹ and R² may have a linear structure or a branched structure. The alkoxycarbonylalkyl group may have a linear structure or a branched structure. Examples of R¹ and R² include hydrogen atoms, methyl groups, ethyl groups, n-propyl groups, iso-propyl groups, n-butyl groups, tert-butyl groups, pentyl groups, hexyl groups, and octyl groups. Examples of R¹ include, in addition to these, a methoxycarbonylpropyl group and an octyloxycarbonylpropyl group. Among them, R¹ is preferably a hydrogen atom or an alkyl group, particularly a hydrogen atom, a methyl group, a tert-butyl group, a pentyl group, or an octyl group. R¹ and R² may be the same or different.

Examples of the halogen atom of X include a fluorine atom, a chlorine atom, a bromine atom, and an iodine atom, and a chlorine atom is preferred.

For Y¹ and Y², only either one may be a hydroxyl group, or both may be hydroxyl groups. At least Y² is preferably a hydroxyl group.

Specific examples of the compound represented by formula (2) include 5-chloro-2-[3-(tert-butyl)-2-hydroxy-5-methylphenyl]-2H-benzotriazole, 2-(3,5-di-t-butyl-2-hydroxyphenyl)-5-chlorobenzotriazole, octyl 3-[3-tert-butyl-5-(5-chloro-2H-benzotriazol-2-yl)-4-hydroxyphenyl]propionate, methyl 3-(5-chloro-2H-benzotriazol-2-yl)-5-(1,1-dimethylethyl)-4-hydroxyphenylpropionate, 2-(3,5-di-tert-amyl-2-hydroxyphenyl)benzotriazole, and 2-(2,4-dihydroxyphenyl)-2H-benzotriazole.

The benzotriazole-based compound may be other than the compound represented by the formula (2) and may be, for example, 2-[2-hydroxy-3,5-bis(α,α-dimethylbenzyl)phenyl]-2H-benzotriazole or 2-(2H-benzotriazol-2-yl)-6-(1-methyl-1-phenylethyl)-4-(1,1,3,3-tetramethylbutyl)phenol.

One ultraviolet absorbent may be used singly, or two or more ultraviolet absorbents may be used in combination.

The content of the ultraviolet absorbent is preferably 0.005% by mass or more and 2% by mass or less in the interlayer film. By setting the content of the ultraviolet absorbent at 0.005% by mass or more, the deterioration of the colorant (Y) and the like due to ultraviolet rays included in sunlight can be suitably prevented, and the weather resistance can be enhanced. By setting the content of the ultraviolet absorbent at 2% by mass or less, the resin layer can be prevented from being tinted with the ultraviolet absorbent, and further the effect corresponding to the content is also easily exhibited.

The content of the ultraviolet absorbent in the interlayer film is more preferably 0.01% by mass or more and 1% by mass or less, further preferably 0.05% by mass or more and 0.5% by mass or less.

The interlayer film contains one or more resin layers, and the preferred values of the content of the ultraviolet absorbent in each resin layer containing the ultraviolet absorbent are the same as the preferred values of the content of the ultraviolet absorbent in the interlayer film described above.

### (Antioxidant)

Examples of the antioxidant include a phenol-based compound, a phosphoric acid-based compound, and a sulfur-based compound. The antioxidant prevents the oxidative deterioration of the interlayer film and the colorant to improve the weather resistance. Among the above, a phenol-based compound is preferred from the viewpoint of improving the weather resistance.

Examples of the phenol-based compound include 2,6-di-t-butyl-p-cresol (BHT), butylated hydroxyanisole (BHA), 2,6-di-t-butyl-4-ethylphenol, stearyl-β-(3,5-di-t-butyl-4-hydroxyphenyl)propionate, 2,2'-methylenebis-(4-methyl-6-butylphenol), 2,2'-methylenebis-(4-ethyl-6-t-butylphenol), 4,4'-butylidene-bis-(3-methyl-6-t-butylphenol), 1,1,3-tris-(2-methyl-hydroxy-5-t-butylphenyl)butane, tetrakis[methylene-3-(3',5'-butyl-4-hydroxyphenyl)propionate]methane, 1,3,3-tris-(2-methyl-4-hydroxy-5-t-butylphenol)butane, 1,3,5-trimethyl-2,4,6-tris(3,5-di-t-butyl-4-hydroxybenzyl)benzene, and bis(3,3'-t-butylphenol)butyric acid glycol ester and pentaerythritol tetrakis[3-(3,5-di-tert-butyl-4-hydroxyphenyl)propionate].

Examples of the phosphoric acid-based compound include trisnonylphenyl phosphite, tridecyl phosphite, 2-ethyl-2-butylpropylene-4,6-tritert-butylphenol phosphite, 9,10-dihydro-9-oxa-10-phosphaphenanthrene, tetra(tridecyl)isopropylidenediphenol diphosphite, and tris[2-tert-butyl-4-(3-tert-hydroxy-5-methylphenylthio)-5-methylphenyl]phosphite.

Examples of the sulfur-based compound include dialkyl thiodipropionates such as dilauryl thiodipropionate, dimyristyl thiodipropionate, and distearyl thiodipropionate, and β-alkylmercaptopropionates of polyols such as pentaerythritol tetra(β-dodecylmercaptopropionate).

One antioxidant may be used singly, or two or more antioxidants may be used in combination.

The content of the antioxidant in the interlayer film is preferably 0.005% by mass or more and 2% by mass or less. By setting the content of the antioxidant at 0.005% by mass or more, the oxidative deterioration of the resin, the colorant, and the like can be suitably prevented, and the weather resistance can be enhanced. By setting the content of the antioxidant at 2% by mass or less, the effect corresponding to the content is also easily exhibited.

The content of the antioxidant in the interlayer film is more preferably 0.01% by mass or more and 1% by mass or less, further preferably 0.05% by mass or more and 0.5% by mass or less.

The interlayer film contains one or more resin layers, and the preferred values of the content of the antioxidant in each resin layer containing the antioxidant are the same as the preferred values of the content of the antioxidant in the interlayer film described above.

### (Light Stabilizer)

The light stabilizer is preferably a hindered amine light stabilizer. The light stabilizer prevents the deterioration of the interlayer film and the colorant due to irradiation with ultraviolet rays included in sunlight or the like.

Examples of the hindered amine light stabilizer include a hindered amine light stabilizer in which an alkyl group, an alkoxy group, or a hydrogen atom is bonded to the nitrogen atom of a piperidine structure. From the viewpoint of still further suppressing the deterioration, a hindered amine light stabilizer in which an alkyl group or an alkoxy group is bonded to the nitrogen atom of a piperidine structure is preferred. The hindered amine light stabilizer is preferably a hindered amine light stabilizer in which an alkyl group is bonded to the nitrogen atom of a piperidine structure, and is also preferably a hindered amine light stabilizer in which an alkoxy group is bonded to the nitrogen atom of a piperidine structure.

Only one light stabilizer may be used, or two or more light stabilizers may be used in combination.

Examples of the hindered amine light stabilizer in which an alkyl group is bonded to the nitrogen atom of a piperidine structure include bis(1,2,2,6,6-pentamethyl-4-piperidyl) sebacate and 1,2,3,4-Butanetetracarboxylic acid, tetrakis(1,2,2,6,6-pentamethyl-4-piperidinyl) ester. A commercial product can also be used, and examples thereof include "Tinuvin 765" and "Tinuvin 622 SF" manufactured by BASF, and "ADK STAB LA-52" manufactured by ADEKA Corporation.

Examples of the hindered amine light stabilizer in which an alkoxy group is bonded to the nitrogen atom of a piperidine structure include "Tinuvin XT-850 FF" and "Tinuvin XT-855 FF" manufactured by BASF, and "ADK STAB LA-81" manufactured by ADEKA Corporation.

Examples of the hindered amine light stabilizer in which a hydrogen atom is bonded to the nitrogen atom of a piperidine structure include "Tinuvin 770 DF" manufactured by BASF and "Hostavin N 24" manufactured by Clariant.

The content of the light stabilizer in the interlayer film is preferably 0.001% by mass or more and 0.5% by mass or less. By setting the content of the light stabilizer at 0.001% by mass or more, the deterioration of the interlayer film and the colorant due to ultraviolet rays or the like can be suitably prevented, and the weather resistance can be enhanced. By setting the content of the light stabilizer at 0.5% by mass or less, the effect corresponding to the content is also easily exhibited.

The content of the light stabilizer in the interlayer film is more preferably 0.005% by mass or more and 0.4% by mass or less, further preferably 0.01% by mass or more and 0.2% by mass or less.

The interlayer film contains one or more resin layers, and the preferred values of the content of the light stabilizer in each resin layer containing the light stabilizer are the same as the preferred values of the content of the light stabilizer in the interlayer film described above.

### (Adhesion Modifier)

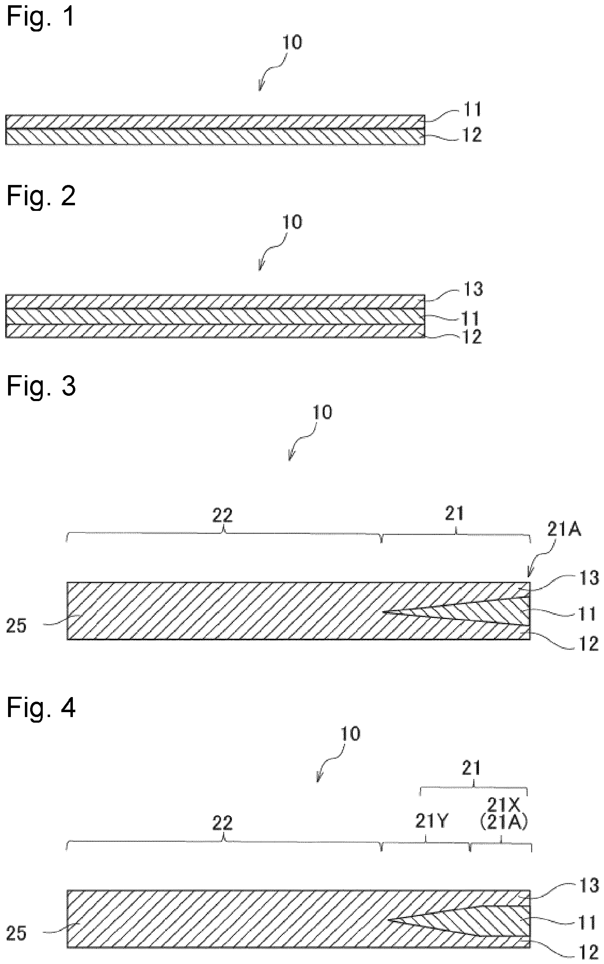

The interlayer film may contain an adhesion modifier. For the interlayer film, the adhesiveness between the interlayer film and glass plates is controlled by the adhesion modifier, and laminated glass excellent in penetration resistance is easily obtained. The adhesion modifier should be contained in the resin layer disposed at positions to be in contact with glass plates. Therefore, in the case of a single-layer structure, the adhesion modifier should be contained in the resin layer having a single-layer structure, but in the case of an interlayer film containing first to third resin layers, as shown in Figs. 2 to 6 described later, the adhesion modifier should be contained in the second and third resin layers.

The adhesion modifier is not particularly limited and is preferably a metal salt, more preferably at least one metal salt selected from the group consisting of an alkali metal salt, an alkaline earth metal salt, and a Mg salt. The metal salt preferably includes at least one metal of K and Mg. The metal salt is more preferably an alkali metal salt of an organic acid having 2 to 16 carbon atoms or an alkaline earth metal salt of an organic acid having 2 to 16 carbon atoms, further preferably a magnesium carboxylate salt having 2 to 16 carbon atoms or a potassium carboxylate salt having 2 to 16 carbon atoms. The magnesium carboxylate salt having 2 to 16 carbon atoms and the potassium carboxylate salt having 2 to 16 carbon atoms are not particularly limited, and examples thereof include magnesium acetate, potassium acetate, magnesium propionate, potassium propionate, magnesium 2-ethylbutyrate, potassium 2-ethylbutyrate, magnesium 2-ethylhexanoate, and potassium 2-ethylhexanoate. One adhesion modifier may be used singly, or two or more adhesion modifiers may be used in combination. When two or more adhesion modifiers are used in combination, magnesium acetate and magnesium 2-ethylbutyrate are preferably used in combination.

In the resin layer in which the adhesion modifier is contained, the content of the adhesion modifier is preferably 5 ppm by mass or more and 1000 ppm by mass or less, further preferably 10 ppm by mass or more and 500 ppm by mass or less, and preferably 20 ppm by mass or more and 200 ppm by mass or less based on the amount of the metal element derived from the metal salt. When the content of the adhesion modifier is within the ranges, the adhesion to glass plates can be suitably adjusted without decreasing the weather resistance and the like.

### (Heat Shielding Agent)

The interlayer film may contain a heat shielding agent. By containing the heat shielding agent, the heat shielding properties of the interlayer film can be still further improved. The heat shielding agent is typically a material that can absorb infrared rays, that is, heat rays, having a wavelength of 780 nm or more. The heat shielding agent is composed of an inorganic material, and typically heat shielding particles are used. Specific examples thereof include metal oxide particles and particles other than metal oxide particles, such as lanthanum hexaboride (LaB6) particles. Examples of the metal oxide particles include tin oxide particles such as aluminum-doped tin oxide particles, indium-doped tin oxide particles, and antimony-doped tin oxide particles (ATO particles), zinc oxide particles such as gallium-doped zinc oxide particles (GZO particles), indium-doped zinc oxide particles (IZO particles), aluminum-doped zinc oxide particles (AZO particles), tin-doped zinc oxide particles, and silicon-doped zinc oxide particles, titanium oxide particles such as niobium-doped titanium oxide particles, indium oxide particles such as tin-doped indium oxide particles (ITO particles), and tungsten oxide particles such as sodium-doped tungsten oxide particles, cesium-doped tungsten oxide particles (CWO particles), thallium-doped tungsten oxide particles, and rubidium-doped tungsten oxide particles. Heat shielding particles other than these may be used. One heat shielding agent may be used singly, or two or more heat shielding agents may be used in combination.

Among these, because of the high heat ray blocking function, metal oxide particles are preferred, at least one selected from the group consisting of ATO particles, GZO particles, ITO particles, and CWO particles is more preferably used, and ITO particles or CWO particles are further preferably used.

A preferred lower limit of the average particle diameter of the heat shielding particles is 10 nm, a more preferred lower limit is 20 nm, a preferred upper limit is 100 nm, a more preferred upper limit is 80 nm, and a further preferred upper limit is 50 nm. When the average particle diameter is equal to or more than the preferred lower limit, the heat ray blocking properties can be sufficiently enhanced. When the average particle diameter is equal to or less than the preferred upper limit, visible light is less likely to be blocked more than necessary by the heat shielding agent. The "average particle diameter" indicates the volume average particle diameter. The average particle diameter can be measured using a particle size distribution measuring apparatus ("UPA-EX150" manufactured by NIKKISO CO., LTD.) or the like.

The content of the heat shielding agent in the interlayer film is preferably 0.005% by mass or more and 2.0% by mass or less, more preferably 0.01% by mass or more and 1.5% by mass or less, and further preferably 0.04% by mass or more and 1.0% by mass or less. By setting the content of the heat shielding particles within these ranges, the heat shielding properties of the interlayer film can be enhanced without decreasing the visible light transmittance and the like.

In a multilayer structure, the heat shielding agent may be blended into the colored resin layer in which the colorant is contained, or may be blended into other than the colored resin layer.

The interlayer film may also contain additives such as a fluorescent brightening agent and a crystal nucleating agent, as needed, in addition to the above.

### <Layer Configuration>

The layer configuration of the interlayer film of the present invention will be described in more detail below.

### (Single-layer structure)

In the present invention, the interlayer film may have a single-layer resin layer (also referred to as a "first resin layer"). When the interlayer film is composed of a single-layer resin layer, the resin layer is a colored resin layer containing a colorant (Y). When the interlayer film contains a colorant other than the colorant (Y), the first resin layer should also contain the colorant other than the colorant (Y).

For the single-layer resin layer, both surfaces of the resin layer should be respectively adhered to glass plates constituting laminated glass. In the interlayer film having a single-layer structure, the entire region of the interlayer film should be a region containing a colorant (Y) (colored region). For convenience, a region colored with a colorant (Y)herein as a "colored region" and a region colored with only a material other than a "colorant (Y) " is not referred to as a "colored region".

### (Multilayer Structure)

The interlayer film may have a multilayer structure including a plurality of resin layers, as described above. The multilayer structure composed of the plurality of resin layers may be a two-layer structure in which two resin layers are laminated in the thickness direction, a three-layer structure in which three resin layers are laminated, or one in which four or more resin layers are laminated. Among these, the interlayer film preferably has a two- to five-layer structure, and further preferably a three-layer structure. In the case of a multilayer structure, at least one resin layer is a colored resin layer including a colorant (Y).

Specific examples when the interlayer film has a multilayer structure will be described below using first to sixth embodiments shown in Figs. 1 to 6.

The interlayer film 10 of the first embodiment shown in Fig. 1 is an interlayer film having a two-layer structure and has a first resin layer 11 and a second resin layer 12, and the second resin layer 12 is provided on one surface side of the first resin layer 11.

For the interlayer film 10 having a two-layer structure, it is suitable that in laminated glass, the first resin layer 11 adhere to one glass plate, and the second resin layer adhere to the other glass plate. For the first resin layer 11 and the second resin layer 11, either one should be a colored resin layer having the colorant (Y), but both may be colored resin layers having the colorant (Y). In the interlayer film 10 having a two-layer structure, it is suitable that the entire region has a two-layer structure, and the entire region be a colored region, as shown in Fig. 1.

When the interlayer film contains a colorant other than the colorant (Y), the colorant other than the colorant (Y) may be contained in the colored resin layer(s) or the resin layer other than the colored resin layer but is preferably contained in the colored resin layer(s).

The interlayer film 10 of the second embodiment shown in Fig. 2 is an interlayer film having a three-layer structure and has first to third resin layers 11, 12, and 13, and the second resin layer 12 is provided on one surface side of the first resin layer 11, and the third resin layer 13 is provided on the other surface side of the first resin layer 11. For the interlayer film 10 of the third embodiment, it is suitable that in laminated glass, the second resin layer 11 adhere to one glass plate, and the third resin layer 13 adhere to the other glass plate.

At least any one of the first to third resin layers 11, 12, and 13 contains a colorant (Y) and is a colored resin layer. Specifically, of the first to third resin layers 11, 12, and 13, only the first resin layer 11 may be a colored resin layer, or only one of the second and third resin layers 12 and 13 or both of these may be colored resin layers. Further, the first resin layer 11 and either one of the second and third resin layers 12 and 13 may be colored resin layers. In addition, all of the first to third resin layers 11, 12, and 13 may be colored resin layers.

Among the above, preferably at least the first resin layer 11 is a colored resin layer. When the entire region of the interlayer film is a colored region, as shown in Fig. 2, an embodiment in which the first resin layer 11 is a colored resin layer is also preferred, but an embodiment in which the second and third resin layers 12 and 13 are colored resin layers is also preferred.

When the interlayer film contains a colorant other than the colorant (Y), the colorant other than the colorant (Y) may be contained in the colored resin layer(s) or the resin layer(s) other than the colored resin layer(s) but is preferably contained in the colored resin layer(s), and therefore the first resin layer 11 preferably contains the colorant (Y) and the colorant other than the colorant (Y).

When an interlayer film has a multilayer structure, the entire region of the interlayer film may be a colored region, as shown in Figs. 1 and 2, but a partial region may be a colored region. Specifically, like the interlayer film 10 shown in the third embodiment shown in Fig. 3, when an interlayer film has first to third resin layers 11, 12, and 13 and has a three-layer structure, the interlayer film may have such a structure that in the partial region 21 (first region 21) of the interlayer film, the first resin layer 11 is disposed between the second and third resin layers 12 and 13 and embedded between these resin layers 12 and 13. Here, the first region 21 is a region (gradation region) in which the thickness of the first resin layer 11 decreases continuously along the direction orthogonal to the thickness direction (that is, one direction of the plane directions) from the thickest portion 21A at an end of the interlayer film 10. The first resin layer 11 has a tapered shape along the direction orthogonal to the thickness direction. It is suitable that in the region beyond the tip of the tapered shape (that is, a second region 22 adjacent to the first region 21), the second and third resin layers 12 and 13 be directly laminated, and these be integral and constitute one resin layer 25.

Also here, as described above, at least one of the first to third resin layers 11, 12, and 13 should be a colored resin layer, and among them, the first resin layer 11 is preferably a colored resin layer. When the first resin layer 11 is a colored resin layer, the shade changes gradually from the thickest portion 21A toward the second region 22, and an interlayer film excellent in designability can be provided.

When the first resin layer 11 is a colored resin layer, each of the second and third resin layers 12 and 13 may contain the colorant (Y) but preferably contains no colorant (Y). Thus, it is possible to make the first region 21 a colored region and make the second region 22 a non-colored region. Here, the non-colored region means a region that contains no colorant (Y) and is not colored with the colorant (Y). In this embodiment, the content of the colorant (Y) in the interlayer film should be lower in the second region 22 than in the first region 21.

When the interlayer film contains a colorant other than the colorant (Y), the first resin layer 11 preferably contains the colorant other than the colorant (Y), in addition to the colorant (Y), in this embodiment. However, one or both of the second and third resin layers 12 and 13 may contain the colorant other than the colorant (Y).

When an interlayer film has such a structure in which in the first region 21, the first resin layer 11 is disposed between the second and third resin layers 12 and 13 and embedded between these resin layers 12 and 13, as shown by the interlayer film 10 of the third embodiment, the configuration of the first region 21 is not limited to the above. For example, like the interlayer film 10 of the fourth embodiment shown in Fig. 4, the first region 21 may be composed of a region 21X in which the thickness is fixed, and a region (gradation region) 21Y which is connected to the region 21X and in which the thickness decreases continuously along the direction orthogonal to the thickness direction.

In this case, the configuration of the fourth embodiment is as described for the third embodiment except for having the region 21X.

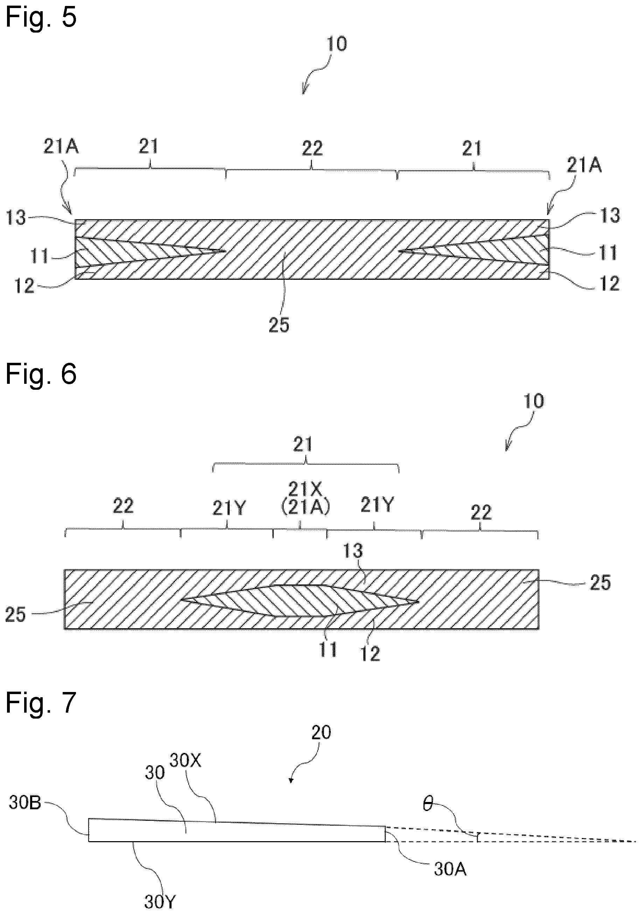

In the third and fourth embodiments, only one first region 21 is provided, but as shown in the fifth embodiment in Fig. 5, a plurality of first regions 21 may be provided. That is, in the above, the first region 21 is provided at only one end in the direction orthogonal to the thickness direction but may be provided at both ends, like the interlayer film of the fifth embodiment.

Further, the first region 21 in which the first resin layer 11 is embedded between the first and second resin layers 12 and 13 may be provided at a position other than an end and may be provided, for example, between both ends (in the central portion), as shown in the sixth embodiment shown in Fig. 6.

Here, the first region 21is composed of a region 21X in which the thickness is fixed, and regions (gradation regions) 21Y and 21Y which are connected to both ends of the region 21X and in which the thickness decreases continuously along the direction orthogonal to the thickness direction, but the region 21X may be omitted.

A second region 22 is provided on the tip side of the tapered shape of each region 21Y in the same manner as the third to fifth embodiments. In the second region 22, the second resin layer 12 and the third resin layer 13 are directly laminated, and these are integral and form a resin layer 25.

Also in the fifth and sixth embodiments, configurations other than the configurations described above are the same as the interlayer film of the third embodiment, and therefore their description is omitted.

In the third to sixth embodiments, in the first region 21, resin layers adjacent to each other in the thickness direction (for example, the third and first resin layers 13 and 11 and the first and second resin layers 11 and 12) should have different compositions from each other. On the other hand, a description has been given assuming an embodiment in which the second resin layer 12 and the third resin layer 13 both have the same composition, and in the second region 22, these two resin layers 12 and 13 are integral and form one layer (first layer 25). However, the two resin layers 12 and 13 may have different compositions from each other, and form a multilayer structure of the two resin layers 12 and 13 in the second region 22 without forming one layer.

In the same manner, in the second embodiment, in the entire region, resin layers adjacent to each other in the thickness direction (for example, the third and first resin layers 13 and 11 and the first and second resin layers 11 and 12) should have different compositions from each other. On the other hand, the third resin layer 13 and the second resin layer 12 may have different compositions from each other or may have the same composition as each other.

Of course, the number of resin layers may be four or more, and in the interlayer film, in addition to the first to third resin layers described using the second to sixth embodiments (Fig. 2 to Fig. 6), a fourth resin layer or fourth and fifth resin layers may be provided. In this case, the interlayer film may have, for example, a laminated structure in which third, first, second, and fourth resin layers are provided in this order. In the same manner, when fourth and fifth resin layers are provided, the interlayer film should have, for example, a laminated structure in which third, first, second, fourth, and fifth resin layers are provided in this order.

The laminated structures described above are examples of the laminated structure of the interlayer film of the present invention, and the laminated structure of the interlayer film of the present invention is not limited to these structures.

In each of the laminated structures, the details of the resin and the plasticizer in each resin layer are as described above, and regarding the resin layers, a configuration as described above should be appropriately used.

For example, when the interlayer film is a multilayer structure having the first to third resin layers 11 to 13, like the second to sixth embodiments, and the first to third resin layers 11 to 13 contain polyvinyl acetal resins as the resins constituting the resin layers, the details of the polyvinyl acetal resins constituting the first to third resin layers 11, 12, and 13, and the details of the plasticizer are as described above.

The interlayer film may have a cross-sectional rectangular shape as shown in Figs. 1 to 6, but the cross-sectional shape of the interlayer film is not limited to a cross-sectional rectangular shape, and the interlayer film may have, for example, a wedge shape. An interlayer film 30 having a wedge shape has one end 30A and the other end 30B opposite to the one end 30A, the thickness of the other end 30B is larger than the thickness of one end 30A, and the interlayer film 30 has a wedge shape as a whole, as shown in Figs. 7 to 9.

For example, when an image is projected on laminated glass by a projector in a head-up display system, a double image may be seen due to the refraction of light in the two glass plates, but by forming the interlayer film into a wedge shape as described above to control the refraction of light, a double image can be prevented.

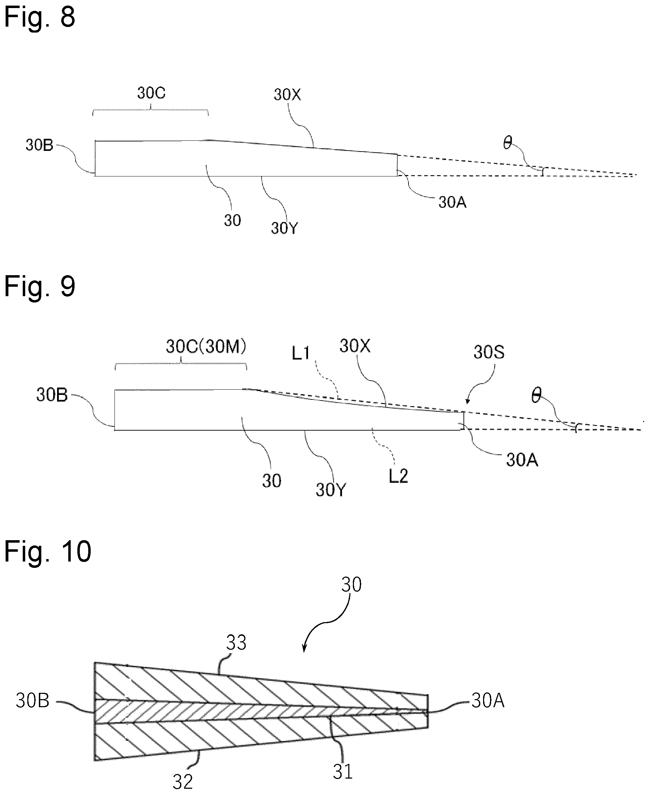

The wedge-shaped interlayer film 30 may have, for example, a trapezoidal shape as shown in Fig. 7 but may have a triangular shape. For the wedge-shaped interlayer film 30, the thickness changes from the other end 30A toward one end 30B, but the thickness need not change in all portions, and the interlayer film 30 has a portion 30C in which the thickness is fixed, as shown in Fig. 8, and the portion where the thickness changes may be partial.

Further, in Figs. 7 and 8, the increase in thickness is fixed from one end 30A toward the other end 30B in the portion where the thickness changes, but the increase in thickness need not be fixed, and it is possible that as shown in Fig. 9, the thickness changes gradually, and the interlayer film 30 is, for example, curved in cross section.

For the wedge angle θ, as shown in Figs. 7 and 8, when the increase in thickness is fixed, the wedge angle is also fixed. Therefore, the tilt angle of the other surface 30Y to one surface 30X of the interlayer film 30 is the wedge angle θ.

On the other hand, when the increase in thickness changes, as shown in Fig. 9, the wedge angle θ is as follows. The wedge angle θ is the interior angle at the intersection point of a straight line L1 connecting the nearest sites of a maximum thickness portion 30M and a minimum thickness portion 30S in the interlayer film 30 on one surface 30X of the interlayer film 30 and a straight line L2 connecting the nearest sites of the maximum thickness portion 30M and the minimum thickness portion 30S on the other surface 30Y.

The wedge angle θ is preferably 0.1 mrad or more, more preferably 0.2 mrad or more, and further preferably 0.3 mrad or more, and preferably 1 mrad or less, further preferably 0.9 mrad or less. By setting the wedge angle θ within these ranges, infrared rays reflected by laminated glass are easily imaged at one point in light receiving means such as a photographing apparatus.

When the interlayer film has a wedge shape and is a single-layer structure, the single-layer resin layer having the colorant (Y) should have a wedge shape.

When the interlayer film has a wedge shape and is a multilayer structure, the cross-sectional shapes of the layers should be appropriately adjusted so that the cross section of the interlayer film has a wedge shape. For example, when a plurality of resin layers are provided in the entire region, as shown in Figs. 1 and 2, the thickness of at least one resin layer of the plurality of resin layers should be adjusted so that the thickness increases from one end toward the other end. Of course, also when the interlayer film has a wedge shape, a partial region may be multilayer, as shown in Fig. 3 to Fig. 6. In that case, the thicknesses of the layers should be appropriately adjusted so that the cross section of the interlayer film has a wedge shape.

One example of a case where a wedge-shaped interlayer film has a multilayer structure is shown in Fig. 10. As shown in Fig. 10, for a wedge-shaped interlayer film 30, in accordance with an increase in the thickness of the interlayer film 30 from one end 30A toward the other end 30B, the thickness of a first resin layer 31 should also be increased from one end 30A toward the other end 30B. When the thickness of the first resin layer 31 changes from one end 30A toward the other end 30B, gradations can be given to the interlayer film, for example, when the first resin layer 31 is a colored resin layer.

The thicknesses of first and third resin layers 31 and 33 may also be increased from one end 30A toward the other end 30B in accordance with an increase in the thickness of the interlayer film 30 from one end 30A toward the other end 30B. In Fig. 10, the increment in the thickness of each resin layer is fixed, but the increment in thickness need not be fixed, and it is possible that the thickness changes gradually, and the interlayer film 30 is, for example, curved in cross section. In the wedge-shaped interlayer film 30, at least any one of the first to third resin layers 31, 32, and 33 may have a fixed thickness.

For the first to third resin layers 31, 32, and 33, at least any one should contain the colorant (Y) and be a colored resin layer, and the details are as described above, and an embodiment in which among them, the second and third resin layers 32 and 33 are colored resin layers is more preferred.

### [Thickness of Interlayer Film]

The thickness of the interlayer film is preferably 0.2 mm or more and 2.0 mm or less. For the interlayer film, by adjusting the content of the colorant (Y) as described above and then setting the thickness within the range, laminated glass is easily made colored glass having high designability. The thickness of the interlayer film is more preferably 0.25 mm or more and 1.0 mm or less, further preferably 0.3 mm or more and 0.9 mm or less. For the thickness of the interlayer film, the thickness may change, like the wedge-shaped interlayer film, and in that case, the thickness of the interlayer film means the portion where the interlayer film is the thinnest (thinnest portion).

In a multilayer structure, the thickness of the colored resin layer is not particularly limited but is, for example, 0.01 or more and 1 or less, preferably 0.03 or more and 0.75 or less, and more preferably 0.05 or more and 0.45 or less to the total thickness of the interlayer film in thickness ratio (colored resin layer/total thickness).

The specific thickness of the colored resin layer in the multilayer structure is not particularly limited but is, for example, 0.02 mm or more and 1 mm or less, preferably 0.03 mm or more and 0.8 mm or less, and further preferably 0.04 mm or more and 0.5 mm or less. By setting the thickness of the colored resin layer at 0.02 mm or more and 1 mm or less, the designability of the interlayer film is easily made good without making the interlayer film larger than necessary.

When there are two or more colored resin layers, the thickness of the colored resin layer means their total thickness. The thickness of the colored resin layer is the thickness of the colored resin layer in the portion where the colored resin layer is the thickest (thickest portion).

As described above, when the multilayer structure contains first to third resin layers, the first resin layer is preferably a colored resin layer. In such a case, the thickness of the first resin layer (colored resin layer) is not particularly limited but is 0.02 mm or more and 1 mm or less, preferably 0.03 mm or more and 0.8 mm or less, and further preferably 0.04 mm or more and 0.5 mm or less. The thickness of each of the second and third resin layers is not particularly limited but is, for example, 0.1 mm or more and 0.7 mm or less, more preferably 0.15 mm or more and 0.6 mm or less, and further preferably 0.2 mm or more and 0.5 mm or less.

### [Optical Properties of Interlayer Film]

For the interlayer film of the present invention, the ΔE is preferably 5 or less when laminated glass made by adhering two clear glass plates to each other via the interlayer film is irradiated with light from a xenon light source in which the accumulated amount of light at 300 to 400 nm is 60 W/m², under the conditions of a temperature of 63°C and a humidity of 50% RH for 2000 h. The ΔE means the color difference between the laminated glass before irradiation and the laminated glass after irradiation.

By setting the ΔE at 5 or less, the discoloration of the laminated glass can be prevented, and high designability can be maintained, even if the laminated glass is used under sunlight irradiation and under high temperature for a long period. The ΔE is more preferably 3 or less, further preferably 2 or less, and still further preferably 0.9 or less. As the ΔE becomes lower, it becomes better, and the ΔE should be 0 or more.

For the interlayer film of the present invention, the haze measured for laminated glass made by adhering two clear glass plates to each other via the interlayer film is preferably 2.5% or less. When the haze is 2.5% or less, light diffusion by the colorant contained in the interlayer film is suitably prevented, and coloration with the colorant is easily made vivid. From the above viewpoint, the haze is more preferably 2% or less, further preferably 1.5% or less, and still further preferably 1.0% or less. As the haze becomes lower, it becomes better, and the haze should be 0% or more.

For the interlayer film of the present invention, the L* measured for laminated glass made by adhering two clear glass plates to each other via the interlayer film is, for example, 15 or more, preferably 50 or more, more preferably 60 or more, and further preferably 90 or more. By increasing the L*, the visible light transmittance also increases, and laminated glass having high transparency is easily obtained. The L* should be 100 or less and is preferably 96 or less, more preferably 94 or less. By setting the L* at a certain value or less, the laminated glass is easily suitably colored with the colorant.

For the interlayer film of the present invention, the L* and the haze measured for laminated glass made by adhering two clear glass plates to each other via the interlayer film are preferably 85 or more and 94 or less and 1.2% or less respectively.

Laminated glass having an L* within the range indicates that it is moderately colored with the colorant though it has certain light transmission properties. When the haze is 1.2% or less in such laminated glass, the color imparted by the colorant is vivid, and the designability is excellent. Further, the laminated glass can also be used for laminated glass in which visibility is more important, like windshield for automobiles. The haze is more preferably 1% or less, further preferably 0.7% or less, and still further preferably 0.5% or less from the viewpoint of designability. As the haze becomes lower, it becomes better, and the haze should be 0% or more.

For the interlayer film of the present invention, an embodiment in which the L* and the haze measured for laminated glass made by adhering two clear glass plates to each other via the interlayer film are less than 85 and 2.5% or less respectively is also preferred.

It can be said that laminated glass having an L* of less than 85 is laminated glass having certain transmission properties though colored a relatively dark color with the colorant. In such laminated glass, when the haze is 2.5% or less, the color imparted by the colorant is vivid, and the designability is excellent. The haze is more preferably 2% or less, further preferably 1.5% or less, and still further preferably 1.0% or less from the viewpoint of designability. As the haze becomes lower, it becomes better, and the haze should be 0% or more.

The interlayer film of the present invention preferably has a local maximum absorption wavelength at 380 nm or more and less than 480 nm in laminated glass made by adhering two clear glass plates to each other via the interlayer film. When the interlayer film has a local maximum absorption wavelength at 380 nm or more and less than 480 nm, the laminated glass is colored yellow, or when the interlayer film has a local maximum absorption wavelength in another wavelength region as described later, the laminated glass can be colored various colors with yellow and another color mixed, to provide laminated glass having high designability. At least one local maximum absorption wavelength of 380 nm or more and less than 480 nm is preferably in the wavelength region of 400 nm or more and 460 nm or less.

The interlayer film may not have a local maximum absorption wavelength at 480 nm or more and 780 nm or less but may have a local maximum absorption wavelength of 480 nm or more and less than 580 nm, a local maximum absorption wavelength of 580 nm or more and 780 nm or less, or both of these, in the laminated glass. By having these local maximum absorption wavelengths, the laminated glass is colored various colors with yellow and other colors mixed.

At least one local maximum absorption wavelength of 480 nm or more and less than 580 nm is preferably in the wavelength region of 500 nm or more and 560 nm or less. At least one local maximum absorption wavelength of 580 nm or more and 780 nm or less is preferably in the wavelength region of 590 nm or more and 730 nm or less.

Moreover, for the interlayer film, the transmittance at a local maximum absorption wavelength of 380 nm or more and less than 480 nm is preferably lower than the transmittance at a local maximum absorption wavelength of 480 nm or more and less than 580 nm and the transmittance at a local maximum absorption wavelength of 580 nm or more and 780 nm or less in the laminated glass. According to such an embodiment, in the laminated glass, coloration with yellow is dominant, and the laminated glass is easily colored yellow or a yellowish color.

The transmittance at a local maximum absorption wavelength of 380 nm or more and less than 480 nm being lower than the transmittance at a local maximum absorption wavelength of 480 nm or more and less than 580 nm also encompasses a case where a local maximum absorption wavelength is at 380 nm or more and less than 480 nm, and no local maximum absorption wavelength is at 480 nm or more and less than 580 nm. In the same manner, the transmittance at a local maximum absorption wavelength of 380 nm or more and less than 480 nm being lower than the transmittance at a local maximum absorption wavelength of 580 nm or more and 780 mm or less also encompasses a case where a local maximum absorption wavelength is at 380 nm or more and less than 480 nm, and no local maximum absorption wavelength is at 580 nm or more and 780 mm or less.

The clear glass plates used in the measurement of the ΔE, L*, haze, local maximum absorption wavelength, and transmittance at local maximum absorption wavelengths have a thickness of 2.5 mm and have a visible light transmittance of 90.5% as measured in accordance with JIS R 3106: 1998. For the clear glass plates, a* and b* satisfy the values a* = -0.6 and b* = 0.2 which are determined using the CIE standard illuminant D65 and the color matching functions for a field of view of 10° prescribed in JIS Z 8781-1 (2012), JIS Z 8781-2 (2012), and JIS Z 8781-4 (2013), and the haze is 0.2% or less. The clear glass plates are also referred to as standard clear glass.

The interlayer film may have a colored region containing the colorant (Y), and a non-colored region containing no colorant (Y), and in that case, the measurement of the ΔE, the L*, the haze, the local maximum absorption wavelength, and the transmittance at local maximum absorption wavelengths means the ΔE, the L*, and the haze in the colored region unless otherwise mentioned. It is possible that the colored region has, for example, a gradation region, the content of the colorant (Y) at the total thickness of the interlayer film changes, and the visible light transmittance and the like also change. In that case, the ΔE, the L*, the haze, the local maximum absorption wavelength, and the transmittance at local maximum absorption wavelengths should be measured in the colored region where the content of the colorant (Y) is highest. When the interlayer film is such that the thickness changes in the colored region where the content of the colorant (Y) is highest, like a wedge-shaped interlayer film, these optical properties should be measured at any arbitrary position and satisfy the prescriptions, and, for example, the measured values measured in the portion where the interlayer film is the thinnest should satisfy the prescriptions.

### (Method for Producing Interlayer Film)

When the interlayer film of the present invention is a single-layer structure, for example, it is suitable that the components constituting the interlayer film, such as a resin, the colorant (Y), and a colorant other than the colorant (Y), and additives other than colorants blended as needed, be mixed, and the obtained resin composition be formed by extrusion, compression molding, or the like, which is not particularly limited.

Here, for the colorant (Y), from the viewpoint of enhancing the dispersibility in the resin composition, for example, when a plasticizer is used, the colorant (Y) should be blended into the plasticizer, sufficiently dispersed in the plasticizer, and then mixed with a resin. At this time, a dispersant or the like may be appropriately added to the plasticizer.

By sufficiently dispersing the colorant (Y) in the plasticizer or the like when blending the colorant (Y) into the resin composition, aggregation in the interlayer film can be prevented to also decrease the D50 and D90 of the colorant (Y) and further the D50(T), the D90(T), and the like.

When a colorant other than the colorant (Y) is used, the colorant other than the colorant (Y) should also be blended into the plasticizer, sufficiently dispersed in the plasticizer, and then mixed with a resin. By also sufficiently dispersing the colorant other than the colorant (Y), the D50 and D90 of the colorant other than the colorant (Y) and further the D50(T) and the D90(T) are easily decreased.

At this time, the colorant other than the colorant (Y) may be blended into the plasticizer into which the colorant (Y) is blended, and dispersed in the plasticizer together with the colorant (Y). The colorant other than the colorant (Y) may be blended into a plasticizer provided separately from the plasticizer into which the colorant (Y) is blended, to also provide a plasticizer in which the colorant other than the colorant (Y) is dispersed, in addition to the plasticizer in which the colorant (Y) is dispersed.

The method for dispersing the colorant in the plasticizer is not particularly limited, and examples thereof include a method of dispersing the colorant using a dispersion apparatus such as a bead mill, a sand mill, a roll mill, a ball mill, a jet mill, a paint shaker, a microfluidizer, a high speed impeller, a sand grinder, a flow jet mixer, a high pressure wet atomization apparatus, or an ultrasonic dispersion apparatus. The dispersion in the dispersion apparatus may involve the grinding of the colorant. Especially, from the viewpoint of making the particle diameter smaller, a method of grinding pigment particles by a wet grinding machine in a state of being dispersed in an organic solvent, the plasticizer, and the like is preferred, and examples include a jet mill, a bead mill, a ball mill, and a high pressure wet atomization apparatus.

For the colorant, by appropriately adjusting the dispersion treatment method, the D50 and the D90 can be adjusted. For example, by increasing the rotation speed in various apparatuses during the dispersion treatment, the dispersion treatment time, and the like, the colorant is highly dispersed in the plasticizer to easily decrease the D50, the D90, and the like.

By adding a surfactant in the dispersion treatment, it is possible to make the dispersion easy and make the adjustment of the D50 and the D90 easy. The type of the surfactant does not particularly matter as long as it dissolves in the dispersion solvent. When the colorant is dispersed in a plasticizer, a nonionic surfactant that dissolves easily in the plasticizer is more preferred. Examples of the nonionic surfactant include a polyoxyalkylene glycol-based nonionic surfactant, a fatty acid alcohol-based nonionic surfactant, and a copolymer-based nonionic surfactant having a plurality of functional groups selected from the group consisting of a hydroxyl group, a carboxyl group, an amino group, a phosphate group, and the like.

Also when the interlayer film is a multilayer structure, it should be formed by extrusion, compression molding, or the like in the same manner as when it is a single-layer structure. For example, a method is preferred in which two or more extruders are provided, a multilayer feed block is attached to the tips of the plurality of extruders, and coextrusion is performed.

For example, a method is preferred in which a plurality of extruders are provided, and components constituting resin layers are supplied to the extruders and coextruded with a multilayer feed block attached to the tips of these extruders. When a plurality of resin layers are provided, and there are two or more resin layers having the same composition (for example, second and third resin layers), the two or more resin layers having the same composition may be extruded from one extruder. Further, for the resin layers, the thickness may change along the direction orthogonal to the thickness direction, and in that case, the thickness should be changed, for example, by adjusting the amount of the resin supplied, or the like.

### <Laminated Glass>

The present invention further provides laminated glass. The laminated glass includes two glass plates and an interlayer film disposed between these glass plates. The two glass plates are adhered to each other via the interlayer film. For the interlayer film, one surface adheres to one glass plate, and the other surface adheres to the other glass plate.

The laminated glass should be produced by disposing the above-described interlayer film between two glass plates and integrating these by pressure bonding or the like.

### (Glass Plates)

The glass plates used in the laminated glass may be either of inorganic glass and organic glass, but inorganic glass is preferred. The inorganic glass is not particularly limited, and examples thereof include clear glass, float plate glass, polished plate glass, figured glass, mesh wire glass, line wire glass, and green glass.

As the organic glass, organic glass referred to as resin glass is generally used. The organic glass is not particularly limited, and examples thereof include organic glass composed of a resin such as a polycarbonate, an acrylic resin, an acrylic copolymer resin, or a polyester.

The two glass plates may be composed of the same type of material as each other or may be composed of different materials. For example, it is possible that one is inorganic glass and the other is organic glass, but it is preferred that both the two glass plates be inorganic glass or organic glass.

The thicknesses of the glass plates are not particularly limited but are, for example, about 0.1 to 15 mm, preferably 0.5 to 5 mm. The thicknesses of the glass plates may be the same as each other or may be different but are preferably the same.

### [Optical Properties of Laminated Glass]

The laminated glass of the present invention should have the same optical properties as the optical properties described for the interlayer film. Specifically, the laminated glass of the present invention preferably has a ΔE of 5 or less, more preferably 3 or less, further preferably 2 or less, and still further preferably 0.9 or less when irradiated with light from a xenon light source in which the accumulated amount of light at 300 to 400 nm is 60 W/m², under the conditions of a temperature of 63°C and a humidity of 50% RH for 2000 h. As the ΔE becomes lower, it becomes better, and the ΔE should be 0 or more.

The laminated glass of the present invention preferably has a haze of 2.5% or less, more preferably 2% or less, further preferably 1.5% or less, and still further preferably 1.0% or less. As the haze becomes lower, it becomes better, and the haze should be 0% or more.

The L* of the laminated glass is, for example, 15 or more, preferably 50 or more, more preferably 60 or more, and further preferably 90 or more, and the L* should be 100 or less and is preferably 96 or less, more preferably 94 or less.

The laminated glass of the present invention preferably has an L* of 85 or more and 94 or less and a haze of 1.2% or less. At this time, the haze is more preferably 1% or less, further preferably 0.7% or less, and still further preferably 0.5% or less, and the haze should be 0% or more.

An embodiment in which the laminated glass of the present invention has an L* of less than 85 and a haze of 2.5% or less is also preferred. At this time, the haze is more preferably 2% or less, further preferably 1.5% or less, and still further preferably 1.0% or less, and should be 0% or more.

The laminated glass of the present invention preferably has a local maximum absorption wavelength at 380 nm or more and less than 480 nm. In addition, the laminated glass may not have a local maximum absorption wavelength at 480 nm or more and 780 nm or less but may have a local maximum absorption wavelength of 480 nm or more and less than 580 nm, a local maximum absorption wavelength of 580 nm or more and 780 nm or less, or both of these.

Moreover, for the laminated glass, the transmittance at a local maximum absorption wavelength of 380 nm or more and less than 480 nm is preferably lower than the transmittance at a local maximum absorption wavelength of 480 nm or more and less than 580 nm and the transmittance at a local maximum absorption wavelength of 580 nm or more and 780 nm or less.

The preferred values of the local maximum absorption wavelength of 380 nm or more and less than 480 nm, local maximum absorption wavelength of 480 nm or more and less than 580 nm, and local maximum absorption wavelength of 580 nm or more and 780 nm or less are as described for the interlayer film.

The laminated glass of the present invention can be used as window glass for various vehicles such as automobiles, aircraft, ships, buildings, and the like but is preferably used as automobile laminated glass. The automobile laminated glass may be any of windshield glass (front glass), side glass, rear glass, and roof glass.

### Examples

The present invention will be described in more detail by Examples, but the present invention is not limited in any way by these examples.

The measurement methods and the evaluation methods in the present Examples are as follows.

### [Thickness of Interlayer Film]

An interlayer film was measured by a micrometer ("OMV-50MX" manufactured by Mitutoyo Corporation).

### [Particle Diameters of Colorant]

An obtained interlayer film was cut parallel to the plane direction using a cryomicrotome (EM FC7 manufactured by LEICA), and the cut surface was photographed by a transmission electron microscope (TEM). As the transmission electron microscope, "JEM-2100" (manufactured by JEOL) was used, and the cut surface was photographed with the acceleration voltage set at 200 kV and the photographing magnification set at 10000X. The photographed image was obtained with the number of pixels set at 2048 pixels × 2048 pixels and 1 pixel set at 0.96 nm.

100 Or more particles of a colorant (Y) were photographed at random, and the major axes of the particles were measured as the particle diameters to obtain the particle diameter distribution. For the particle diameter measurement from the image, open source image analysis software Fiji (ImageJ) was used. For the procedure, particle regions in the image were selected by the Polygon selections tool and binarized, and then Analyze Particles was executed on the selected regions to obtain the major axes of the approximate ellipses of the particles. For the particles, when primary particles aggregated and were present as secondary particles, the major axes of the secondary particles were measured. In the particle diameter distribution, the particle diameter at which the number frequency accumulation was 50% was determined as the D50 of the colorant (Y), and the particle diameter at which the number frequency accumulation was 90% was determined as the D90 of the colorant (Y).

For interlayer films containing a colorant other than the colorant (Y), also for each colorant other than the colorant (Y), 100 or more particles were photographed in the same manner, and the D50 and the D90 were obtained as the D50 and D90 of each colorant other than the colorant (Y).

Further, in each interlayer film, 100 or more particles for the entire colorant were photographed, and in the same manner, the D50 and the D90 were obtained as the D50(T) and D90(T) of the entire colorant.

### [L*, a*, and b*]

For laminated glass, the spectrum was measured in accordance with JIS R3212 (2015) using a spectrophotometer ("U-4100" manufactured by Hitachi High-Technologies Corporation). In the measurement, laminated glass was placed at a position 13 cm away from an integration sphere so that only parallel light transmitted through the laminated glass was received by the integrating sphere and so that the laminated glass was on the optical path between a light source and the integrating sphere and parallel to the normal line to the optical axis, and the spectral transmittance was measured. The L*, a*, and b* were measured under the measurement conditions of a scan speed of 300 nm/min and a slit width of 8 nm using for other measurement conditions the CIE standard illuminant D65 and the color matching functions for a field of view of 10° prescribed in JIS Z 8781-1 (2012), JIS Z 8781-2 (2012), and JIS Z 8781-4 (2013).

In addition, whether the laminated glass had a local maximum absorption wavelength at 380 nm or more and less than 480 nm in the spectrum or not was confirmed. Further, whether the transmittance at a local maximum absorption wavelength of 380 nm or more and less than 480 nm was lower than the transmittance at a local maximum absorption wavelength of 480 nm or more and less than 580 nm and the transmittance at a local maximum absorption wavelength of 580 nm or more and 780 nm or less or not was also confirmed.

### [Haze]

The haze was measured for obtained laminated glass in accordance with JIS K6714.

### [Weather Resistance]

Laminated glass was allowed to stand under the following conditions for 1000 h using "SX-75" manufactured by Suga Test Instruments Co., Ltd., and the L*, a*, and b* before and after standing were measured. The ΔE after standing for 1000 h was calculated from the differences in L*, a*, and b* before and after standing, ΔL, Δa*, and Δb*, by the following formula. It is indicated that as the ΔE becomes lower, the deterioration when the laminated glass is irradiated with ultraviolet rays in a high temperature environment becomes smaller, and the weather resistance becomes higher.

The ΔE was calculated as ΔE = (ΔL*^2 + Δa*^2 + Δb*^2)^0.5.

The ΔE after standing for 2000 h was also obtained in the same manner except that the standing time was changed to 2000 h.

### (Conditions)

Laminated glass was irradiated with a xenon lamp using quartz as the inner filter of the xenon lamp and #275 as the outer filter so that the accumulated amount of light at 300 to 400 nm was 60 W/m². The black panel temperature was 63°C, the relative humidity was 50% RH, and the sample cell rotation speed was 2 rpm.

The components used in the Examples and Comparative Examples are as follows.

### (1) Resin

PVB1: polyvinyl butyral resin, degree of acetalization 69 mol %, amount of hydroxyl groups 30 mol %, degree of acetylation 1 mol %, average degree of polymerization of PVA used for synthesis 1700

### (2) Plasticizer

3GO: triethylene glycol di-2-ethylhexanoate

### (3) Ultraviolet Absorbents

Tinuvin 326: 5-chloro-2-[3-(tert-butyl)-2-hydroxy-5-methylphenyl]-2H-benzotriazole, trade name "Tinuvin 326", manufactured by BASF
UV234: 2-[2-hydroxy-3,5-bis(α,α-dimethylbenzyl)phenyl]-2H-benzotriazole, trade name "RIASORB 234", manufactured by Rianlon Japan
Tinuvin 640: 2-(2H-benzotriazol-2-yl)-6-(1-methyl-1-phenylethyl)-4-(1,1,3,3-tetramethylbutyl)phenol, trade name "Tinuvin 640", manufactured by BASF
EV88: methyl 3-(5-chloro-2H-benzotriazol-2-yl)-5-(1,1-dimethylethyl)-4-hydroxyphenylpropionate, trade name "Eversorb 88", manufactured by Everlight Chemical Industrial Corp

### (4) Antioxidants

BHT: 2,6-di-tert-butyl-p-cresol
1010: pentaerythritol tetrakis[3-(3,5-di-tert-butyl-4-hydroxyphenyl)propionate]

### (5) Light Stabilizer

HALS: bis(1,2,2,6,6-pentamethyl-4-piperidyl) sebacate, trade name "Tinuvin 765", manufactured by BASF, CAS number: 41556-26-7

### (6) Adhesion Modifiers

Mg Salt: 50:50 (mass ratio) mixture of magnesium 2-ethylbutyrate and magnesium acetate
K Salt: potassium acetate

### (7) Colorants (Y)

PY150(1): Pigment Yellow 150 (CAS No. 68511-62-6), a nickel complex azo pigment, one obtained by blending Pigment Yellow 150 at a concentration of 2.5% by mass and a nonionic surfactant in an appropriate amount into the plasticizer (3GO) and dispersing the blend using a high pressure wet atomization apparatus until the desired particle diameter was obtained.
   40 Parts by mass of the plasticizer based on PVB, and a dispersion (PY150(1)) in which the colorant was dispersed in part of the plasticizer were added to the polyvinyl butyral resin (PVB) so that the pigment concentration was 0.03% by mass, and kneaded and extruded by an extruder to form an interlayer film sheet, and the D50 and the D90 were measured. As a result, the D50 was 73 µm, and the D90 was 111 µm. The local maximum absorption wavelengths were 435 nm and 455 nm.
PY150(2): Pigment Yellow 150 (CAS No. 68511-62-6), a nickel complex azo pigment, one obtained by blending Pigment Yellow 150 at a concentration of 2.5% by mass and a nonionic surfactant in an appropriate amount into the plasticizer (3GO) and more highly dispersing the blend than PY150(1) using a high pressure wet atomization apparatus by increasing the dispersion time until the desired particle diameter was obtained. The D50 and the D90 were measured in the same manner as PY150(1). As a result, the D50 was 47 µm, and the D90 was 75 µm. The local maximum absorption wavelengths were 435 nm and 455 nm.
PY150(3): Pigment Yellow 150 (CAS No. 68511-62-6), a nickel complex azo pigment, one obtained by blending Pigment Yellow 150 at a concentration of 2.5% by mass and a nonionic surfactant in an appropriate amount into the plasticizer (3GO) and lower dispersing the blend than PY150(1) using a high pressure wet atomization apparatus by making the dispersion time shorter than that of PY150(1). The D50 and the D90 were measured in the same manner as PY150(1). As a result, the D50 was 120 µm, and the D90 was 150 µm. The local maximum absorption wavelengths were 435 nm and 455 nm.

### (8) Colorant (y)

PY110: Pigment Yellow 110 (CAS No. 5590-18-1), an isoindoline-based pigment, one obtained by blending Pigment Yellow 110 at a concentration of 2.5% by mass and a nonionic surfactant in an appropriate amount into the plasticizer (3GO) and dispersing the blend using a high pressure wet atomization apparatus until the desired particle diameter was obtained. The D50 and the D90 were measured in the same manner as PY150(1). As a result, the D50 was 211 µm, and the D90 was 312 µm. The local maximum absorption wavelength was 435 nm.
SY16: Solvent Yellow 16 (CAS No. 4314-14-1), a monoazo dye, one obtained by blending Solvent Yellow 16 at a concentration of 2.5% by mass and a nonionic surfactant in an appropriate amount into the plasticizer (3GO) and dispersing the blend. No particles of Solvent Yellow 16 were confirmed in the interlayer film. The local maximum absorption wavelength decreased monotonously from 480 nm to 400 nm, and no local maximum point (that is, local maximum absorption wavelength) was confirmed.
PY93: Pigment Yellow 93 (CAS No. 5580-57-4), a diazo pigment, one obtained by blending Pigment Yellow 93 at a concentration of 2.5% by mass and a nonionic surfactant in an appropriate amount into the plasticizer (3GO) and dispersing the blend. An interlayer film was made by the same method as PY150(1), and the particle diameters were observed. As a result, the D50 was 145 µm, and the D90 was 189 µm.

But no particle diameters were confirmed. The local maximum absorption wavelength was 420 nm.

### (9) Carbon Material

PBk-7: Pigment Black 7 (CAS No. 1333-86-4), a carbon black pigment, one obtained by blending Pigment Black 7 at a concentration of 1.5% by mass and a nonionic surfactant in an appropriate amount into the plasticizer (3GO) and dispersing the blend. The D50 and the D90 were measured in the same manner as PY150(1). As a result, the D50 was 57 µm, and the D90 was 89 µm.

### (10) Colorants (B)

PB15-1: Pigment Blue 15-1 (CAS No. 147-14-8), a copper phthalocyanine α-type crystal pigment, one obtained by blending Pigment Blue 15-1 at a concentration of 3% by mass and a nonionic surfactant in an appropriate amount into the plasticizer (3GO) and dispersing the blend. The D50 and the D90 were measured in the same manner as PY150(1). As a result, the D50 was 81 µm, and the D90 was 107 µm. The local maximum absorption wavelengths were 585 nm and 670 nm.
PB15-3: Pigment Blue 15-3 (CAS No. 147-14-8), a copper phthalocyanine γ-type crystal pigment, one obtained by blending Pigment Blue 15-3 at a concentration of 3% by mass and a nonionic surfactant in an appropriate amount into the plasticizer (3GO) and dispersing the blend. The D50 and the D90 were measured in the same manner as PY150(1). As a result, the D50 was 86 µm, and the D90 was 92 µm. The local maximum absorption wavelengths were 615 nm and 715 nm.

### (11) Colorants (R)

PR149: Pigment Red 149 (CAS No. 4948-15-6), a perylene-based pigment, one obtained by blending Pigment Red 149 at a concentration of 3% by mass and a nonionic surfactant in an appropriate amount into the plasticizer (3GO) and dispersing the blend. The D50 and the D90 were measured in the same manner as PY150(1). As a result, the D50 was 110 µm, and the D90 was 145 µm. The local maximum absorption wavelengths were 485 nm, 505 nm, and 550 nm.
PR209 (1): Pigment Red 209 (CAS No. 38720-66-0), a chlorinated quinacridone-based pigment, one obtained by blending Pigment Red 209 at a concentration of 3% by mass and a nonionic surfactant in an appropriate amount into the plasticizer (3GO) and dispersing the blend. The D50 and the D90 were measured in the same manner as PY150(1). As a result, the D50 was 78 µm, and the D90 was 160 µm. The local maximum absorption wavelengths were 510 nm and 540 nm.
PR122 (2): Pigment Red 122 (CAS No. 16043-40-6), a methylated quinacridone-based pigment, one obtained by blending Pigment Red 122 at a concentration of 3% by mass and a nonionic surfactant in an appropriate amount into the plasticizer (3GO) and dispersing the blend. The D50 and the D90 were measured in the same manner as PY150(1). As a result, the D50 was 69 µm, and the D90 was 111 µm. The local maximum absorption wavelengths were 540 nm and 560 nm.

### (12) Heat Shielding Agent

ITO: tin-doped indium oxide particles

### [Example 1]

### (Making of Interlayer Film)

A dispersion (PY150(1)) in which the colorant was dispersed in part of the plasticizer, the remaining plasticizer, an ultraviolet absorbent, an antioxidant, and an adhesion modifier were kneaded with the polyvinyl butyral resin (PVB) so as to obtain blending in Table 1 and extruded using an extruder to obtain a 380 µm thick interlayer film. The interlayer film was an interlayer film composed of a single-layer resin layer.

### (Making of Laminated Glass)

Two clear glasses were provided. Each was 100 mm long by 100 mm wide by 2.5 mm thick. As the clear glasses, the standard clear glasses described herein were used.. The interlayer film obtained above was maintained under the constant temperature and humidity conditions of 23°C and 28% RH for 4 h and then sandwiched between the two clear glasses to form a laminated body. The obtained laminated body was placed in a rubber bag, and the pressure was reduced by a vacuum pump. Then, the laminated body was heated so that the temperature of the glass reaches 90°C in an oven and temporarily pressure-bonded. The temporarily pressure-bonded laminated body was pressure-bonded under the conditions of 135°C and a pressure of 1.2 MPa for 20 min using an autoclave to make laminated glass. For the obtained laminated glass, the optical properties were measured and are shown in Table 1 as the properties of the interlayer film and the laminated glass.

In Example 1, in the spectrum, the laminated glass had a local maximum absorption wavelength at 380 nm or more and less than 480 nm, but no local maximum absorption wavelength was seen in the wavelength region of 480 nm or more and 780 nm or less.

### [Examples 2 to 19 and Comparative Examples 1 to 6]

Operations were carried out in the same manner as Example 1 except that the thickness of the interlayer film and the types of the blended components and the amounts of the blended components added were changed as described in Tables 1 to 3. In Examples 16 to 19 and Comparative Examples 4 to 6, two or more dispersions in which a colorant was dispersed in part of the plasticizer were used.

In the Examples, the laminated glass had a local maximum absorption wavelength at 380 nm or more and less than 480 nm in the spectrum. In addition, it was confirmed that at 480 nm or more and 780 nm or less, no local maximum absorption wavelength was seen, or a local maximum absorption wavelength was seen, but the transmittance at a local maximum absorption wavelength of 380 nm or more and less than 480 nm was lower than the transmittance at a local maximum absorption wavelength of 480 nm or more and 780 nm or less.

### [Example 20]

The plasticizer, an ultraviolet absorbent, an antioxidant, and an adhesion modifier were kneaded with the polyvinyl butyral resin (PVB) in a coextruder having a plurality of extruders so that the blending of the components other than a colorant was blending in Table 4, to obtain a resin composition containing no colorant, as a resin composition for a first resin layer.

In addition, a dispersion (PY150(1)) in which the colorant was dispersed in part of the plasticizer, the remaining plasticizer, the ultraviolet absorbent, the antioxidant, and the adhesion modifier were kneaded in the coextruder so that the blending of the entire interlayer film was blending in Table 4, to obtain a resin composition containing the colorant, as a resin composition for second and third resin layers.

The resin compositions for the third, first, and second resin layers obtained were coextruded in this lamination order in the coextruder to obtain the interlayer film having a three-layer structure composed of third resin layer (thickness: 330 µm)/first resin layer (thickness: 100 µm)/second resin layer (thickness: 330 µm) shown in Fig. 2. Laminated glass was obtained in the same manner as Example 1 except that the dimensions of the interlayer film and the clear glasses were 1250 mm × 1250 mm.

### [Example 21]

The plasticizer, an ultraviolet absorbent, an antioxidant, and an adhesion modifier were kneaded with the polyvinyl butyral resin (PVB) in a coextruder having a plurality of extruders so that the blending of the components other than a colorant was blending in Table 4, to obtain a resin composition for second and third resin layers containing no colorant.

In addition, a dispersion in which a colorant was dispersed in part of the plasticizer, the remaining plasticizer, the ultraviolet absorbent, the antioxidant, and the adhesion modifier were kneaded in the coextruder so that the blending of the entire thickness of the interlayer film in the thickest portion was blending in Table 4, to obtain a resin composition for a first resin layer containing the colorant.

Operations were carried out in the same manner as Example 20 except that the resin compositions were coextruded in the coextruder while an adjustment was made so that the thickness of the first resin layer decreased gradually along one direction and the first resin layer was provided in a partial region, as shown in Fig. 3. In Example 21, an interlayer film having a three-layer structure composed of third resin layer (thickness: 570 µm)/first resin layer (thickness: 130 µm)/second resin layer (thickness: 60 µm) was obtained. The thicknesses are the thicknesses of the resin layers in the portion where the first resin layer is the thickest portion.

### [Example 22]

Operations were carried out in the same manner as Example 20 except that resin compositions were coextruded in the coextruder with a resin composition containing a colorant being a resin composition for second and third resin layers, and a resin composition containing no colorant being a resin composition for a first resin layer, in the same manner as Example 20, and while an adjustment was made so that the thicknesses of the resin layers decreased gradually from one end toward the other end, as shown in Fig. 10. Thus, a wedge-shaped interlayer film was obtained. In Example 22, for the thicknesses of the resin layers in the portion where the second and third resin layers were the thickest, an interlayer film having a three-layer structure composed of second resin layer (thickness: 460 µm)/first resin layer (thickness: 140 µm)/third resin layer (thickness: 460 µm) was obtained.

**[Table 1]**

| | | | Example 1 | Example 2 | Example 3 | Example 4 | Example 5 | Example 6 | Example 7 | Example 8 |
|---|---|---|---|---|---|---|---|---|---|---|
| | Resin | Type | PVB1 | PVB1 | PVB1 | PVB1 | PVB1 | PVB1 | PVB1 | PVB1 |
| | | phr | 100 | 100 | 100 | 100 | 100 | 100 | 100 | 100 |
| | Plasticizer | Type | 3GO | 3GO | 3GO | 3GO | 3GO | 3GO | 3GO | 3GO |
| | | phr | 40 | 40 | 40 | 40 | 40 | 40 | 40 | 40 |
| | Ultraviolet absorbent | Type | Tinuvin 326 | Tinuvin 326 | Tinuvin 326 | Tinuvin 326 | Tinuvin 326 | Tinuvin 326 | Tinuvin 326 | Tinuvin 326 |
| | | wt% | 0.14 | 0.14 | 0.14 | 0.14 | 0.14 | 0.14 | 0.14 | 0.14 |
| | Antioxidant | Type | BHT | BHT | BHT | BHT | BHT | BHT | 1010 | 1010 |
| | | wt% | 0.14 | 0.14 | 0.14 | 0.14 | 0.14 | 0.14 | 0.07 | 0.07 |
| | Light stabilizer | Type | | | | | | | HALS | HALS |
| | | wt% | | | | | | | 0.018 | 0.018 |
| | Adhesion modifier | Type | Mg Salt | Mg Salt | Mg Salt | Mg Salt | Mg Salt | Mg Salt | Mg Salt | Mg Salt |
| | | Mg(ppm) | 60 | 60 | 60 | 60 | 60 | 60 | 60 | 60 |
| | | Type | | | | | | | | |
| | | K(ppm) | | | | | | | | |
| | Heat shielding agent | Type | | | | | | | | |
| | | wt% | | | | | | | | |
| Interlayer film blending | Colorant (Y), (y) | Type | PY150(1) | PY150(1) | PY150(1) | PY150(2) | PY150(2) | PY150(2) | PY150(2) | PY150(3) |
| | | D50(nm) | 73 | 73 | 73 | 47 | 47 | 47 | 47 | 120 |
| | | D90(nm) | 111 | 111 | 111 | 75 | 75 | 75 | 75 | 150 |
| | | wt% | 0.006 | 0.003 | 0.09 | 0.005 | 0.062 | 0.031 | 0.062 | 0.0425 |
| | Carbon material | Type | | | | | | | | |
| | | D50(nm) | | | | | | | | |
| | | D90(nm) | | | | | | | | |
| | | wt% | | | | | | | | |
| | Colorant (B) | Type | | | | | | | | |
| | | D50(nm) | | | | | | | | |
| | | D90(nm) | | | | | | | | |
| | | wt% | | | | | | | | |
| | Colorant (R) | Type | | | | | | | | |
| | | D50(nm) | | | | | | | | |
| | | D90(nm) | | | | | | | | |
| | | wt% | | | | | | | | |
| Interlayer film properties | Thickness | µm | 380 | 760 | 380 | 380 | 380 | 760 | 380 | 780 |
| | Entire colorant in film | D50(T)(nm) | 73 | 73 | 73 | 47 | 47 | 47 | 47 | 120 |
| | | D90(T)(nm) | 111 | 111 | 111 | 75 | 75 | 75 | 75 | 150 |
| Optical properties | L* | % | 94.9 | 94.9 | 91.0 | 95.1 | 92.1 | 922 | 92.1 | 89.8 |
| | a* | % | -5.8 | -5.8 | -16.1 | -4.5 | -18.1 | -18.1 | -18.1 | -14.6 |
| | b* | % | 14.0 | 14.3 | 91.7 | 92 | 68.5 | 69 | 68.5 | 94.3 |
| | Haze | % | 0.3 | 0.4 | 1.1 | 0.3 | 0.4 | 0.4 | 0.4 | 1.7 |
| Xenon weather resistance test | ΔE | 1000h | 0.2 | 0.2 | 0.3 | 0.2 | 0.3 | 0.3 | 0.3 | 0.3 |
| | ΔE | 2000h | 0.2 | 0.2 | 0.4 | 0.2 | 0.3 | 0.4 | 0.4 | 0.3 |

**[Table 2]**

| | | | Example 9 | Example 10 | Example 11 | Example 12 | Example 13 | Example 14 | Example 15 | Example 16 |
|---|---|---|---|---|---|---|---|---|---|---|
| | Resin | Type | PVB1 | PVB1 | PVB1 | PVB1 | PVB1 | PVB1 | PVB1 | PVB1 |
| | | phr | 100 | 100 | 100 | 100 | 100 | 100 | 100 | 100 |
| | Plasticizer | Type | 3GO | 3GO | 3GO | 3GO | 3GO | 3GO | 3GO | 3GO |
| | | phr | 40 | 40 | 40 | 40 | 40 | 40 | 40 | 40 |
| | Ultraviolet absorbent | Type | Tinuvin 326 | Tinuvin 326 | U V134 | Tinuvin 640 | EV88 | Tinuvin 326 | Tinuvin 326 | Tinuvin 326 |
| | | wt% | 0.14 | 0.14 | 0.21 | 0.28 | 0.14 | 0.14 | 0.14 | 0.14 |
| | Antioxidant | Type | BHT | BHT | BHT | BHT | BHT | BHT | BHT | BHT |
| | | wt% | 0.14 | 0.14 | 0.14 | 0.14 | 0.14 | 0.14 | 0.14 | 0.14 |
| | Light stabilizer | Type | | | | | | | | |
| | | wt% | | | | | | | | |
| | Adhesion modifier | Type | | Mg Salt | Mg Salt | Mg Salt | Mg Salt | Mg Salt | Mg Salt | Mg Salt |
| | | Mg(ppm) | | 30 | 60 | 60 | 60 | 60 | 60 | 60 |
| | | Type | K Salt | K Salt | | | | | | |
| | | K(ppm) | 60 | 30 | | | | | | |
| | Heat shielding agent | Type | | | | | | ITO | | |
| | | wt% | | | | | | 0.15 | | |
| | Colorant (Y), (y) | Type | PY150(2) | PY150(2) | PY150(2) | PY150(2) | PY150(2) | PY150(2) | PY150(2) | PY150(2) |
| | | D50(nm) | 47 | 47 | 47 | 47 | 47 | 47 | 47 | 47 |
| Interlayer film blending | | D90(nm) | 75 | 75 | 75 | 75 | 75 | 75 | 75 | 75 |
| | | wt% | 0.031 | 0.031 | 0.031 | 0.031 | 0.031 | 0.0052 | 0.003 | 0.004 |
| | Carbon material | Type | | | | | | | | |
| | | D50(nm) | | | | | | | | |
| | | D90(nm) | | | | | | | | |
| | | wt% | | | | | | | | |
| | Colorant (B) | Type | | | | | | | | PB15-1 |
| | | D50(nm) | | | | | | | | 81 |
| | | D90(nm) | | | | | | | | 107 |
| | | wt% | | | | | | | | 0.004 |
| | Colorant (R) | Type | | | | | | | | PR149 |
| | | D50(nm) | | | | | | | | 110 |
| | | D90(nm) | | | | | | | | 145 |
| | | wt% | | | | | | | | 0.0028 |
| Interlayer film properties | Thickness | µm | 760 | 760 | 760 | 760 | 760 | 760 | 780 | 780 |
| | Entire colorant in film | D50(T)(nm) | 47 | 47 | 47 | 47 | 47 | 47 | 54 | 80 |
| | | D90(T)(nm) | 75 | 75 | 75 | 75 | 75 | 75 | 88 | 132 |
| Optical properties | L* | % | 0.0 | 0.0 | 00 | 00 | 00 | 94.4 | 81.8 | 84.4 |
| | a* | % | 0.0 | 0.0 | 0.2 | 0.2 | 0.1 | -7.5 | -3.4 | -3.4 |
| | b* | % | 0.0 | 0.0 | -0.3 | -0.3 | -0.2 | 17.4 | 15.8 | 101 |
| | Haze | % | 0.0 | 0.0 | -0.1 | 00 | 0.0 | 0.4 | 0.6 | 0.5 |
| Xenon weather resistance test | ΔE | 1000h | 0.35 | 0.35 | 0.1 | 00 | 0.0 | 0.34 | 0.4 | 0.8 |
| | ΔE | 2000h | 0.4 | 0.4 | 0.1 | 0.0 | 0.1 | 0.32 | 0.5 | 1 |

**[Table 3]**

| | | | Example 17 | Example 18 | Example 19 | Comparative Example 1 | Comparative Example 2 | Comparative Example 3 | Comparative Example 4 | Comparative Example 5 | Comparative Example 6 |
|---|---|---|---|---|---|---|---|---|---|---|---|
| | Resin | Type | PVB1 | PVB1 | PVB1 | PVB1 | PVB1 | PVB1 | PVB1 | PVB1 | PVB1 |
| | | phr | 100 | 100 | 100 | 100 | 100 | 100 | 100 | 100 | 100 |
| | Plasticizer | Type | 3GO | 3GO | 3GO | 3GO | 3GO | 3GO | 3GO | 3GO | 3GO |
| | | phr | 40 | 40 | 40 | 40 | 40 | 40 | 40 | 40 | 40 |
| | Ultraviolet absorbent | Type | Tinuvin 326 | Tinuvin 326 | Tinuvin 326 | Tinuvin 326 | Tinuvin 326 | Tinuvin 326 | Tinuvin 326 | Tinuvin 326 | Tinuvin 326 |
| | | wt% | 0.14 | 0.14 | 0.14 | 0.14 | 0.14 | 0.14 | 0.14 | 0.14 | 0.14 |
| | Antioxidant | Type | BHT | BHT | BHT | BHT | BHT | BHT | BHT | BHT | BHT |
| | | wt% | 0.14 | 0.14 | 0.14 | 0.14 | 0.14 | 0.14 | 0.14 | 0.14 | 0.14 |
| | Light stabilizer | Type | | | | | | | | | |
| | | wt% | | | | | | | | | |
| | Adhesion modiier | Type | Mg Salt | Mg Salt | Mg Salt | Mg Salt | Mg Salt | Mg Salt | Mg Salt | Mg Salt | Mg Salt |
| | | Mg(ppm) | 60 | 60 | 60 | 60 | 60 | 60 | 60 | 60 | 60 |
| | | Type | | | | | | | | | |
| | | K(ppm) | | | | | | | | | |
| | Heat shielding agent | Type | | | | | | | | | |
| | | wt% | | | | | | | | | |
| Interlayer film blending | Colorant (Y), (y) | Type | PY150(2) | PY150(2) | PY150(2) | PY110 | SY16 | PY93 | PY110 | PY110 | SY16 |
| | | D50(nm) | 47 | 47 | 47 | 211 | No particles | 145 | 211 | 211 | No particles |
| | | D90(nm) | 75 | 75 | 75 | 312 | No particles | 189 | 312 | 312 | No particles |
| | | wt% | 0.004 | 0.004 | 0.003 | 0.069 | 0.023 | 0.038 | 0.0345 | 0.0054 | 0.0068 |
| | Carbon material | Type | PBₖ-7 | | PBₖ-7 | | | | PBₖ-7 | PBₖ-7 | |
| | | D50(nm) | 57 | | 57 | | | | 57 | 57 | |
| | | D90(nm) | 89 | | 89 | | | | 89 | 89 | |
| | | wt% | 0.002 | | 0.01 | | | | 0.005 | 0.0011 | |
| | Colorant (B) | Type | | PB15-3 | PB15-1 | | | | | | PB15-1 |
| | | D50(nm) | | 86 | 81 | | | | | | 81 |
| | | D90(nm) | | 92 | 107 | | | | | | 107 |
| | | wt% | | 0.004 | 0.01 | | | | | | 0.004 |
| | Colorant (R) | Type | PR149 | PR209(1) | PR122(2) | | | | | PR149 | PR149 |
| | | D50(nm) | 110 | 78 | 69 | | | | | 110 | 110 |
| | | D90(nm) | 145 | 160 | 111 | | | | | 145 | 145 |
| | | wt% | 0.0042 | 0.0028 | 0006 | | | | | 0.0042 | 0.0028 |
| Interlayer film properties | Thickness | µm | 780 | 780 | 760 | 400 | 780 | 780 | 780 | 780 | 760 |
| | Entire colorant in ilm | D50(T)(nm) | 75 | 80 | 77 | 211 | No particles | 145 | 180 | 170 | 90 |
| | | D90(T)(nm) | 135 | 140 | 100 | 312 | No particles | 189 | 310 | 290 | 130 |
| Optical properties | L* | % | 82.0 | 87.9 | 57.0 | 87.7 | 93.2 | 88.3 | 76.1 | 83.8 | 83.8 |
| | a* | % | 7.2 | -8.4 | -5.1 | 0.1 | -14.0 | -10.8 | 1.6 | 9.7 | -6.0 |
| | b* | % | 19.9 | 7.2 | -0.6 | 47.9 | 49.8 | 73.8 | 44.2 | 9.0 | 100 |
| | Haze | % | 0.8 | 0.7 | 0.9 | 2.4 | 0.3 | 3.7 | 4 | 1.12 | 1.23 |
| Xenon weather resistance test | ΔE | 1000h | 0.8 | 1 | 1.5 | 10 | 15 | 2.8 | 4.8 | 4.75 | 16.3 |
| | ΔE | 2000h | 12 | 14 | 1.9 | 31.1 | 30.5 | 6 | 8.9 | 7.23 | 19 |

**[Table 4]**

| | | | Example 20 | Example 21 | Example 22 |
|---|---|---|---|---|---|
| Cross-sectional shape of Interlayer film | | | Fig. 2 | Fig. 3 | Fig. 10 |
| Distance between one end and the other end of Interlayer film (X) | | mm | 1250 | 1250 | 1250 |
| Wedge angle for entire Interlayer film (θ) | | m rad | 0 | 0 | 0.3 |
| Interlayer film blending | Resin | Type | PVB1 | PVB1 | PVB1 |
| | | phr | 100 | 100 | 100 |
| | Plasticizer | Type | 3GO | 3GO | 3GO |
| | | phr | 40 | 40 | 40 |
| | Ultraviolet absorbent | Type | Tinuvin 326 | Tinuvin 326 | Tinuvin 326 |
| | | wt% | 0.14 | 0.14 | 0.14 |
| | Antioxidant | Type | BHT | BHT | BHT |
| | | wt% | 0.14 | 0.14 | 0.14 |
| | Light stabilizer | Type | | | |
| | | wt% | | | |
| | Adhesion modifier | Type | Mg Salt | Mg Salt | Mg Salt |
| | | Mg(ppm) | 60 | 60 | 60 |
| | Colorant (Y) | Type | PY150(1) | PY150(1) | PY150(1) |
| | | D50(nm) | 73 | 73 | 73 |
| | | D90(nm) | 111 | 111 | 111 |
| | | wt% | 0.006 | 0.006 | 0.006 |
| | Carbon material | Type | | | |
| | | D50(nm) | | | |
| | | D90(nm) | | | |
| | | wt% | | | |
| | Colorant (B) | Type | | | |
| | | D50(nm) | | | |
| | | D90(nm) | | | |
| | | wt% | | | |
| | Colorant (R), (r) | Type | | | |
| | | D50(nm) | | | |
| | | D90(nm) | | | |
| | | wt% | | | |
| Interlayer film properties | Thickness at measurement site | µm | 760 | 760 | 760 |
| | Entire colorant in film | D50(T)(nm) | 78 | 78 | 78 |
| | | D90(T)(nm) | 160 | 160 | 160 |
| Optical properties | L* | % | 89.0 | 89.0 | 89.0 |
| | a* | % | 16.6 | 16.6 | 16.6 |
| | b* | % | -2.1 | -2.1 | -2.1 |
| | Haze | % | 0.6 | 0.6 | 0.6 |
| Xenon weather resistance test | ΔE | 1000h | 0.8 | 0.8 | 0.8 |
| | ΔE | 2000h | 1.2 | 1.2 | 1.2 |

| | | | | | |
|---|---|---|---|---|---|
| * phr is parts by mass based on 100 parts by mass of PVB. * wt% is the content (% by mass) of each component in the interlayer film. For the colorant, wt% is the content of the colorant itself. * Mg(ppm) is the content (ppm by mass) of the magnesium element derived from the adhesion modifier in the interlayer film. * The amount of the plasticizer blended is an amount also including the amount of the plasticizer used for dispersing the colorant. * In Table 4, the content of the colorant is a content according to the definitions herein and is the same as the content of the colorant in the entire interlayer film for Examples 20 and 22 and is the content of the colorant in the portion where the first resin layer is the thickest, for Example 21. The content of other components is the same in all resin layers and means both the content in the resin layers and the content in the entire interlayer film. In Example 21, the portion where the first resin layer was the thickest was the measurement site, but in Example 22, the thickness portion described in Table 1 (the portion where the interlayer film was the thinnest) was the measurement site. | | | | | |

As shown in Tables 1 to 4, in the Examples, the colorant (Y) having a particular structure was used, and the D50 of the colorant (Y) or the D50(T) of the entire colorant was decreased, and thus the weather resistance was increased while the haze of the laminated glass was decreased. Therefore, for the interlayer films of the Examples, coloration with the colorant is vivid, and even if standing under irradiation with sunlight or high temperature continues for a long period, high designability can be maintained.

On the other hand, in the Comparative Examples, the colorant (Y) having a particular structure was not used, and the D50 of the colorant (Y) or the D50(T) of the entire colorant was high, and therefore the weather resistance could not be increased while the haze of the laminated glass was decreased.

### Reference Signs List

- 10, 30: interlayer film
- 11, 31: first layer
- 12, 32: second layer
- 13, 33: third layer
- 21: first region
- 22: second region
- 21A: thickest portion
- 21X: region in which thickness is fixed
- 21Y: gradation region
- 30A: one end
- 30B: the other end

## Claims

1. An interlayer film for laminated glass comprising one or more colorants, the colorant comprising a colorant (Y) having a structure represented by the following formula (1), and
the colorant (Y) having a D50 of 160 nm or less as measured by a transmission electron microscope, 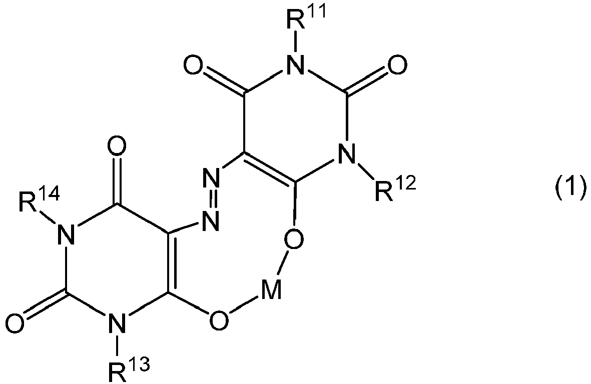 wherein M is a divalent metal element, and R¹¹ to R¹⁴ are each independently either a hydrogen atom or an alkyl group.

2. An interlayer film for laminated glass comprising one or more colorants, the colorant comprising a colorant (Y) having a structure represented by the following formula (1), and
a D50 of an entire colorant in the interlayer film for laminated glass measured by a transmission electron microscope being 180 nm or less, 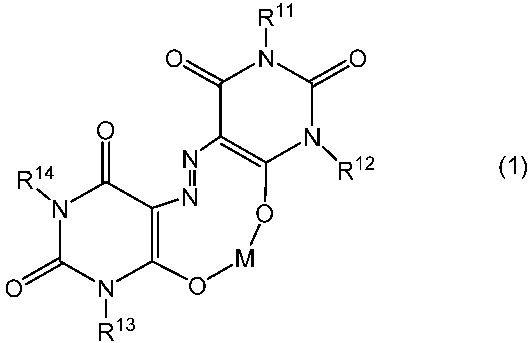 wherein M is a divalent metal element, and R¹¹ to R¹⁴ are each independently either a hydrogen atom or an alkyl group.

3. The interlayer film for laminated glass according to claim 1 or 2, wherein the colorant (Y) has a D90 of 160 nm or less as measured by a transmission electron microscope.

4. The interlayer film for laminated glass according to any one of claims 1 to 3, wherein a D90 of the entire colorant in the interlayer film for laminated glass measured by a transmission electron microscope is 180 nm or less.

5. The interlayer film for laminated glass according to any one of claims 1 to 4, wherein ΔE is 5 or less when laminated glass made by adhering two clear glass plates to each other via the interlayer film for laminated glass is irradiated with light from a xenon light source in which an accumulated amount of light at 300 to 400 nm is 60 W/m², under conditions of a temperature of 63°C and a humidity of 50% RH for 2000 h.

6. The interlayer film for laminated glass according to any one of claims 1 to 5, wherein L* and haze measured for laminated glass made by adhering two clear glass plates to each other via the interlayer film for laminated glass are 85 or more and 94 or less and 1.2% or less respectively.

7. The interlayer film for laminated glass according to any one of claims 1 to 5, wherein L* and haze measured for laminated glass made by adhering two clear glass plates to each other via the interlayer film for laminated glass are less than 85 and 2.5% or less respectively.

8. The interlayer film for laminated glass according to any one of claims 1 to 7, wherein the colorant further comprises further at least either of a colorant (R) having a local maximum absorption wavelength at 480 nm or more and less than 580 nm and a colorant (B) having a local maximum absorption wavelength at 580 nm or more and 780 nm or less.

9. The interlayer film for laminated glass according to any one of claims 1 to 8, wherein the colorant comprises a carbon material.

10. The interlayer film for laminated glass according to any one of claims 1 to 9, wherein in laminated glass made by adhering two clear glass plates to each other via the interlayer film for laminated glass, transmittance at a local maximum absorption wavelength of 380 nm or more and less than 480 nm is lower than transmittance at a local maximum absorption wavelength of 480 nm or more and less than 580 nm and transmittance at a local maximum absorption wavelength of 580 nm or more and 780 nm or less.

11. Laminated glass comprising the interlayer film for laminated glass according to any one of claims 1 to 10 and a pair of glass plates, wherein the interlayer film for laminated glass is disposed between the glass plates.
